(19) **Europäisches Patentamt / European Patent Office / Office européen des brevets**

(11) **EP 4 613 782 A1**

(12) **EUROPEAN PATENT APPLICATION**
published in accordance with Art. 153(4) EPC

(43) Date of publication:
**10.09.2025 Bulletin 2025/37**

(21) Application number: **23885748.6**

(22) Date of filing: **31.10.2023**

(51) International Patent Classification (IPC):
**C08B 3/06** (2006.01)    **B01J 20/24** (2006.01)
**C22B 3/24** (2006.01)    **C22B 11/00** (2006.01)

(52) Cooperative Patent Classification (CPC):
**B01J 20/24; C08B 3/06; C22B 3/24; C22B 11/00;**
**Y02P 10/20**

(86) International application number:
**PCT/JP2023/039200**

(87) International publication number:
**WO 2024/095994 (10.05.2024 Gazette 2024/19)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **31.10.2022 PCT/JP2022/040793**

(71) Applicant: **Daicel Corporation**
**Osaka-shi, Osaka 530-0011 (JP)**

(72) Inventors:
• **SAKATA, Yumi**
  **Tokyo 108-8230 (JP)**
• **SEKI, Yoshie**
  **Tokyo 108-8230 (JP)**
• **TANAKA, Kouji**
  **Tokyo 108-8230 (JP)**

(74) Representative: **Grünecker Patent- und**
  **Rechtsanwälte**
  **PartG mbB**
  **Leopoldstraße 4**
  **80802 München (DE)**

(54) **CELLULOSE ACETATE FLAKES, AND GOLD RECOVERY METHOD AND CONCENTRATION METHOD USING SAME**

(57) A cellulose acetate flake is composed of cellulose acetate having a degree of acetyl substitution of 0.80 or more and 2.90 or less, and has an average space velocity SV, as determined by a predetermined method, of more than 1.0 $h^{-1}$ and 120 $h^{-1}$ or less. A method for recovering gold includes: packing the cellulose acetate flake into a cylindrical vessel to form a packed column; and passing a liquid containing gold ions through the packed column to adsorb the gold ions onto the cellulose acetate flake.

**Description**

Technical Field

The present disclosure relates to a cellulose acetate flake. In particular, the present disclosure relates to a cellulose acetate flake packed in a gold recovery column, a gold recovery column packed with the cellulose acetate flake, and a gold recovery method using the column.

Background Art

In recent years, many electric and electronic devices such as cellular phones have been used and discarded. Various metals such as noble metals and rare metals are used in these electric and electronic devices. For this reason, the discarded electric and electronic devices are called "urban mines" for collecting noble metals and are attracting attention. In particular, gold (Au) is a material for a bonding wire for connecting an electrode of an IC chip to a lead frame, and is used in a large amount. Therefore, a technique for efficiently recovering gold from an urban mine is required.

For example, there is known a technique of crushing an electronic component or the like containing gold, then immersing the crushed electronic component in "aqua regia", which is a mixed solution of nitric acid and hydrochloric acid, to extract and dissolve a noble metal, performing filtering as needed, and then adding a reducing agent to the aqua regia solution to separate low-purity crude gold. This crude gold also contains, as impurities, a metal besides gold and an insoluble substance that cannot be removed by filtration. Recovery of gold having a purity of 99.99% (four nines) or more requires a plurality of repetitions of purifying the separated crude gold, and involves a problem that high energy cost is required.

JP 1-111453 A (Patent Document 1) discloses a technique of passing a solution containing a rare metal such as samarium through a column with a filter, which is packed with a small spherical ion exchange resin to separate the rare metal.

JP 2014-109064 A (Patent Document 2) proposes a metal recovery method in which a carboxylic acid ester of a polysaccharide is used as a metal scavenger to scavenge a metal in a solution. In Patent Document 2, powdery or fibrous cellulose acetate is added as a metal scavenger to a solution containing gold ions, and the mixture is stirred to allow the cellulose acetate to adsorb the gold ions.

JP 2017-052961 A (Patent Document 3) discloses a cellulose acetate powder composed of cellulose acetate having a degree of acetylation of from 53 to 56% and a 6% viscosity of from 30 to 200 mPa·s, the cellulose acetate powder having a cumulative pore volume of 0.2 ml/g or more, a proportion of particles having a particle diameter of 500 $\mu$m or more of 40% or less, and an angle of repose of 51° or less. The cellulose acetate powder is produced by pulverizing a cellulose acetate flake.

JP 2020-204002 A (Patent Document 4) discloses a cellulose acetate flake composed of cellulose acetate having a molar content proportion of xylose of 0.5 mol% or more and 1.0 mol% or less, the cellulose acetate flake having an absorptiometric hue of 0.47 cm$^{-1}$ or less, a moisture content of less than 2 mass%, and a specific surface area of 9 m$^2$/g or less. WO 2016/020952 (Patent Document 5) discloses a cellulose acetate flake having an average degree of acetylation of from 60.0 to 61.5%, a viscosity average degree of polymerization of from 360 to 440, and a degree of filtration of 100 or less.

Citation List

Patent Document

Patent Document 1: JP 1-111453 A
Patent Document 2: JP 2014-109064 A
Patent Document 3: JP 2017-052961 A
Patent Document 4: JP 2020-204002 A
Patent Document 5: WO 2016/020952

Summary of Invention

Technical Problem

Patent Document 1 does not describe a technique of selectively separating only gold. In addition, the technique of Patent Document 1 requires a polycondensation reaction of a phenol compound having a carboxyl group, a compound having a phenolic hydroxyl group, and an aldehyde compound under an alkaline condition by a known method, and involves problems of complexity and low recovery efficiency.

Patent Document 2 relates to a batch type adsorption operation, and involves problems of a decrease in adsorption efficiency as the gold ion concentration of the solution containing gold ions decreases, and the like. In addition, considering the industrial process cost, the gold recovery technique using a packed column is advantageous. However, according to the present inventors' findings, a column packed with powdery cellulose acetate exhibits an excessive pressure loss during liquid passage, which may result in a low flow rate or impossible liquid passage. In addition, it is difficult to uniformly pack cellulose acetate in the form of a long-fiber bundle into a column, and partially dense packing of the cellulose acetate may result in a low flow rate or impossible liquid passage.

For efficiently recovering gold from a gold-containing solution, a filler which is excellent in ease of liquid passage when packed in a column and can selectively adsorb gold is required. Patent Document 2 suggests the ability of cellulose acetate to selectively adsorb gold. However, as described above, it is difficult to apply cellulose acetate in the form of a powder or a long-fiber bundle as a filler for a column. Patent Documents 3 to 5 disclose flake-shaped cellulose acetate as another embodiment. However, all the techniques are proposed for the purpose of molding a cellulose acetate flake, and do not define the shape or size of the cellulose acetate flake itself.

A cellulose acetate flake capable of being uniformly packed in a column and of exhibiting excellent ease of liquid passage has not yet been proposed. An object of the present disclosure is to provide a cellulose acetate flake that can be applied as a filler for a gold adsorption (recovery) column. Another object of the present disclosure is to provide a method for selectively adsorbing and recovering gold from a gold-containing solution, in particular, a gold-containing solution obtained by dissolving gold from an electronic component or a processing waste of a decorative article, a waste catalyst or the like using aqua regia.

Solution to Problem

A cellulose acetate flake of the present disclosure is composed of cellulose acetate having a degree of acetyl substitution of 0.80 or more and 2.90 or less. The cellulose acetate flake has an average space velocity SV of more than 1.0 h$^{-1}$ and 120 h$^{-1}$ or less. The average space velocity SV is determined by: placing, in a vertical direction, a column (internal diameter: 10 mm) in which the cellulose acetate flake is packed up to a height of 2.0 cm from a bottom surface of the column; charging a hydrochloric acid solution having a concentration of 2.0 mol/l (temperature: 20°C $\pm$ 5°C) from an upper side of the column; allowing the hydrochloric acid solution to flow down in the column under atmospheric pressure; and dividing an amount (m$^3$/h) of liquid flowing out from a lower side of the column per unit time by a volume (m$^3$) of space occupied by the cellulose acetate flake in the column.

A gold adsorption column of the present disclosure is packed with the above-described cellulose acetate flake as a filler.

A method for recovering gold of the present disclosure includes: packing the above-described cellulose acetate flake into a cylindrical vessel to form a packed column; and passing a liquid containing gold ions through the packed column to adsorb the gold ions onto the cellulose acetate flake.

The present disclosure may relate to a method for concentrating a gold solution, the method including: packing the above-described cellulose acetate flake into a cylindrical vessel to form a packed column; passing a liquid containing gold ions as an original liquid through the packed column to adsorb the gold ions onto the cellulose acetate flake; and passing a desorption liquid through the packed column containing the cellulose acetate flake having the gold ions adsorbed thereonto to obtain a liquid containing gold ions at a concentration higher than that of the original liquid.

Advantageous Effects of Invention

The cellulose acetate flake of the present disclosure can ensure a high degree of ease of liquid passage even when packed into a column. The column packed with the cellulose acetate flake of the present disclosure makes it possible to efficiently and selectively separate and adsorb gold by passing a large amount of a gold-containing solution in a short time without increasing the internal pressure of the column. In addition, this column makes it possible to easily desorb gold ions adsorbed onto the cellulose acetate flake by passing a desorption liquid through the column. Further, since the cellulose acetate as a filler is relatively inexpensive, gold can be easily recovered as a solid by incinerating or dissolving the cellulose acetate flake having gold adsorbed thereonto.

Description of Embodiments

Hereinafter, an example of a preferred embodiment will be specifically described. Each of the configurations, combinations thereof, and the like in each of the embodiments is an example, and various additions, omissions, substitutions, and other changes of the configurations may be made as appropriate without departing from the spirit of the present disclosure. The present disclosure is not limited by the embodiments and is limited only by the claims. Each embodiment disclosed in the present specification can be combined with any other feature disclosed herein.

In the present specification, "from X to Y" indicating a range means "X or more and Y or less"; "ppm" means "mass ppm"; and "%" means "mass% (wt.%)". In the present specification, the "mass%" refers to so-called weight percent, and does not mean mass concentration. In the present specification, all test temperatures are room temperatures ($20°C \pm 5°C$) unless otherwise noted.

Cellulose Acetate Flake

The cellulose acetate flake according to an embodiment of the present disclosure is composed of cellulose acetate having a degree of acetyl substitution of 0.80 or more and 2.90 or less and exhibits an average space velocity SV of more than 1.0 $h^{-1}$. The cellulose acetate may contain a substituent besides the acetyl group as long as the effects of the present disclosure are obtained. Here, the average space velocity SV is measured using a column having an internal diameter of 10 mm. Specifically, the column is placed with an axial center direction of the column being a vertical direction, and the cellulose acetate flake is packed into this column up to a height of 2.0 cm. Thereafter, a hydrochloric acid solution having a concentration of 2.0 mol/l (temperature: $20°C \pm 5°C$) is charged from an upper side of the column at a rate of 3.1 ml/min and allowed to flow down in the column under atmospheric pressure, and an amount ($m^3/h$) of liquid flowing out from a lower side of the column per unit time is divided by a volume ($m^3$) of space occupied by the cellulose acetate flake in the column, to determine the average space velocity SV. Specifically, this volume is expressed as follows: V = 0.005 (m) $\times$ 0.005 (m) $\times \pi \times$ 0.02 (m) = 1.57 $\times 10^{-6}$ ($m^3$).

The cellulose acetate flake according to an embodiment of the present disclosure can selectively adsorb gold ions in a solution. A column typically used for gold recovery utilizes a phenomenon in which a molecule having an ion exchange group having a specific chelating action is strongly bonded to a metal ion in an aqueous solution. On the other hand, it is presumed that, in an adsorption mechanism according to an embodiment of the present disclosure, unlike known ones, a part of the molecular structure of the cellulose acetate flake according to an embodiment of the present disclosure causes a specific physical interaction with gold ions to adsorb gold. More specifically, it is presumed that a specific physical interaction occurs because the size of a pocket (void) specifically formed by a plurality of cellulose chains matches the size of a gold ion. The present inventors have found that, if the cellulose acetate flake enables passage of a prescribed hydrochloric acid solution to an extent that the above-described average space velocity SV is within a specific range, the contact state with a liquid containing gold ions is improved, and that selective adsorption of gold by the above-described physical interaction occurs more efficiently. In addition, in a known gold recovery column, when gold firmly bonded to a filler is desorbed, it is necessary to use a special solution containing an acidic component or the like as an extraction liquid. However, according to an embodiment of the present disclosure in which gold is adsorbed by a physical interaction, it is possible to easily desorb gold by using water (pure water) as an extraction liquid.

For example, the surface structure and pocket size of the cellulose acetate flake vary depending on the production method and production conditions. Therefore, for obtaining a cellulose acetate flake that causes a specific physical interaction with gold ions and selectively adsorbs gold in a solution, it is necessary to control a plurality of properties such as surface area, pore structure, surface polarity, and particle size distribution in addition to particle shape. The present inventors have found that these properties of the cellulose acetate flake are reflected on the average space velocity SV measured under predetermined conditions. The present inventors have also found that a cellulose acetate flake capable of selectively adsorbing and recovering gold is obtained by setting the average space velocity SV as well as the degree of acetyl substitution of cellulose acetate in specific ranges. In other words, the cellulose acetate flake according to an embodiment of the present disclosure has a specific appearance shape called flake, and has a fine shape and physical properties specified by using the parameter average space velocity SV as an index.

Furthermore, the cellulose acetate flake according to an embodiment of the present disclosure has excellent ease of liquid passage when packed in a column. Gold can be selectively and efficiently recovered by passing a gold-containing solution through the column. In other words, the cellulose acetate flake according to an embodiment of the present disclosure can be used as a filler for a gold adsorption (recovery) column. A gold recovery column according to an embodiment of the present disclosure makes it possible to recover only gold, through adsorption and desorption with an extremely high selectivity, from a solution with a gold-containing material called urban mine dissolved in a metal dissolving liquid (aqua regia) or the like. In addition, the cellulose acetate flake according to an embodiment of the present disclosure makes it possible to selectively recover only gold from a hydrochloric acid solution in which various metal ions are dissolved. For example, the cellulose acetate flake according to an embodiment of the present disclosure makes it possible to selectively recover gold even from a solution in which some metal elements such as Li, Be, B, Na, Mg, Al, Si, P, K, Ca, Sc, Ti, V, Cr, Mn, Fe, Co, Ni, Cu, Zn, Ga, Ge, As, Se, Rb, Sr, Y, Zr, Nb, Mo, Ru, Rh, Pd, Ag, Cd, In, Sn, Sb, Te, Cs, Ba, Hf, Ta, W, Re, Os, Ir, Pt, Ti, Pb, Bi, La, Ce, Pr, Nd, Sm, Eu, Gd, Tb, Dy, Ho, Er, Tm, Yb, Lu, and Th coexist in addition to gold (Au). Furthermore, even when as many as 67 types of metal elements (Li, Be, B, Na, Mg, Al, Si, P, K, Ca, Sc, Ti, V, Cr, Mn, Fe, Co, Ni, Cu, Zn, Ga, Ge, As, Se, Rb, Sr, Y, Zr, Nb, Mo, Ru, Rh, Pd, Ag, Cd, In, Sn, Sb, Te, Cs, Ba, Hf, Ta, W, Re, Os, Ir, Pt, Au, Ti, Pb, Bi, La, Ce, Pr, Nd, Sm, Eu, Gd, Tb, Dy, Ho, Er, Tm, Yb, Lu, and Th) are contained in a solution, a super-selective gold adsorption column which selectively adsorbs gold can be obtained.

In addition, the cellulose acetate flake according to an embodiment of the present disclosure can efficiently adsorb gold even when the concentration of gold in a solution is in a low concentration range of about 5 ppm. Furthermore, the cellulose acetate flake according to an embodiment of the present disclosure can preferentially adsorb gold even from a solution in which a metal other than gold is present at a concentration that is 200 or more times that of gold. Therefore, the cellulose acetate flake according to an embodiment of the present disclosure can be applied to recovery of gold ions from a dilute hydrochloric acid-nitric acid mixed solution obtained by diluting aqua regia, which is generally used as a metal dissolving liquid for an urban mine. For example, an exhaust gas catalyst or a hard disk of an electronic component contains a large amount of platinum together with gold. The technique according to an embodiment of the present disclosure makes it possible to selectively recover only gold having a low content rate from a solution of these metals.

In the present specification, the "flake" is defined as a particle having a flat shape such as a flaky shape, a plate-like shape, or a scaly shape. The plan-view shape of the cellulose acetate flake according to an embodiment of the present disclosure may be various shapes such as a circle, an ellipse, and a polygon.

The width of the cellulose acetate flake may be 0.1 mm or more and 10 mm or less, and the thickness thereof may be 0.05 mm or more and 0.1 mm or less. The cellulose acetate flake may have a width of 0.1 mm or more and 1 mm or less, and may have a thickness of 0.05 mm or more and 0.1 mm or less. The cellulose acetate flake may have a width of 0.1 mm or more and 0.17 mm or less, and may have a thickness of 0.05 mm or more and 0.1 mm or less. The cellulose acetate flake has a shape in which the width is larger (longer) than the thickness.

Here, the width of the cellulose acetate flake is an average diameter (an average of a maximum diameter and a minimum diameter) in a plane having a maximum area of a flake-shaped particle, and the thickness of the cellulose acetate flake is an average diameter in a cross section orthogonal to the plane having the maximum area of the flake-shaped particle. The width and thickness of the cellulose acetate flake are determined by microscopic observation. For example, the width and thickness of the cellulose acetate flake can be determined by reading widths and thicknesses of 100 flake-shaped particles arbitrarily extracted from an SEM image (magnification: 10 times) obtained by a scanning electron microscope and calculating average values of the widths and thicknesses.

The cellulose acetate constituting the cellulose acetate flake has a degree of acetyl substitution DS of 0.80 or more and 2.90 or less, preferably 0.90 or more, more preferably 1.00 or more, and even more preferably 1.10 or more, and is preferably 2.80 or less, more preferably 2.70 or less, and even more preferably 2.60 or less. The degree of acetyl substitution DS is preferably 0.90 or more and 2.80 or less, more preferably 1.00 or more and 2.70 or less, and even more preferably 1.10 or more and 2.60 or less. Note that the cellulose acetate may contain an additional substituent besides the acetyl group as long as the effects of the present disclosure are obtained. Examples of the additional substituent include acyl groups such as a propionyl group, a butyryl group, a pentanoyl (valeryl) group, a hexanoyl group, a heptanoyl group, an octanoyl group, a nonanoyl group, an undecanoyl group, a dodecanoyl group, a tridecanoyl group, a tetradecanoyl (myristoyl) group, a pentadecanoyl group, a hexadecanoyl group, a heptadecanoyl group, and an octadecanoyl (stearoyl) group.

The degree of acetyl substitution DS of the cellulose acetate is determined by converting a degree of acetylation AV (%), which means an amount of bonded acetic acid per unit mass of cellulose, according to the following equation.

$$DS = 162.14 \times AV \times 0.01/(60.052 - 42.037 \times AV \times 0.01)$$

Here, the degree of acetylation AV of the cellulose acetate can be measured in accordance with the description of ASTM:D-817-91 (testing method for cellulose acetate or the like). The degree of acetyl substitution DS of the cellulose acetate can also be determined by $^1$H-NMR measurement.

In the cellulose acetate flake according to an embodiment of the present disclosure, the average space velocity SV as determined by the above-described method is more than $1.0\ h^{-1}$. From the viewpoint of improving gold recovery efficiency, the average space velocity SV is preferably $2.0\ h^{-1}$ or more, more preferably $10.0\ h^{-1}$ or more, even more preferably $50.0\ h^{-1}$ or more, and particularly preferably $80.0\ h^{-1}$ or more. The average space velocity SV is preferably $120\ h^{-1}$ or less, and more preferably $110\ h^{-1}$ or less. The average space velocity SV is preferably more than $1.0\ h^{-1}$ and $120\ h^{-1}$ or less, more preferably $2.0\ h^{-1}$ or more and $110\ h^{-1}$ or less, even more preferably $10.0\ h^{-1}$ or more and $110\ h^{-1}$ or less, still more preferably $50.0\ h^{-1}$ or more and $110\ h^{-1}$ or less, even still more preferably $80.0\ h^{-1}$ or more and $108\ h^{-1}$ or less, and particularly preferably $85.0\ h^{-1}$ or more and $108\ h^{-1}$ or less. The average space velocity SV is also preferably in a range of $85.0\ h^{-1}$ or more and $92.0\ h^{-1}$ or less. Details of a measurement method and measurement conditions of the average space velocity SV will be described in the Examples below.

Here, the "space velocity (SV)" as used herein means, for example, the velocity of a liquid passing through a filler in a packed column when the liquid passes through the column, and is defined as a reciprocal of a time during which the liquid is in contact with the filler. In the present specification, the "average space velocity SV" is determined as a ratio of a

volume flow rate ($m^3$/h) of a liquid passing through a filler (i.e., cellulose acetate flake) packed in a column per unit time under atmospheric pressure to a volume ($m^3$) of the filler. That is, when the cellulose acetate flake according to an embodiment of the present disclosure is used as a filler of a column, the average space velocity SV is an index of ease of liquid passage of the column, and is an index indicating a treatment capacity (liquid treatment amount) per unit time of the column (for example, gold adsorption (recovery) column). Hereinafter, in the present specification, the "average space velocity SV" determined under atmospheric pressure for specifying the cellulose acetate according to an embodiment of the present disclosure and a "space velocity SV'" under pressure set in an adsorption test or the like which will be described later are used distinctively.

As described above, the cellulose acetate flake according to an embodiment of the present disclosure has a flat shape. It is considered that this flat shape contributes to improvement in average space velocity SV due to achievement of uniform packing into the column and formation of inter-particle voids through which a treatment liquid easily passes. Further, as described above, the average space velocity SV is also affected by the particle size distribution, specific surface area, total pore volume, surface polarity and the like of the cellulose acetate flake. That is, the average space velocity SV in the present disclosure can be found to be an index that reflects a plurality of physical properties such as the particle size distribution, specific surface area, and total pore volume in addition to the shape and size of the cellulose acetate flake. As a result of intensive studies, the present inventors have found that the problem of the present disclosure can be solved by selecting various physical properties of the cellulose acetate flake in a well-balanced manner within a range in which an average space velocity SV of more than 1.0 $h^{-1}$ is obtained under atmospheric pressure.

Various physical properties desirable for obtaining the average space velocity SV will be sequentially described below.

The particle size distribution of the cellulose acetate flake is measured using a test sieve as defined in JIS Z8801-1:2006 in accordance with general rules for a sieving test method described in JIS Z8815. That is, a proportion of particles having a particle diameter of 850 $\mu$m or more can be determined by: attaching a sieve having a mesh size of 20 mesh (841 $\mu$m) and a receiving pan to a Ro-Tap machine (available from Sieve Factory Iida Co., Ltd., tapping: 156 times/min, rolling: 290 times/min), oscillating 100 g of a sample for 5 minutes, and then calculating a proportion of the mass of the sample on the sieve relative to the entire weight (100 g of the sample). Details of a measurement method and measurement conditions of the particle size distribution will be described in the Examples below.

In the particle size distribution of the cellulose acetate flake according to an embodiment of the present disclosure, the proportion of particles having a particle diameter of 850 $\mu$m or more may be 10% or more, 50% or more, 60% or more, 70% or more, 80% or more, 85% or more, or 90% or more, and an upper limit thereof is 100%. In the particle size distribution of the cellulose acetate flake according to an embodiment of the present disclosure, the proportion of particles having a particle diameter of 850 $\mu$m or more may be 10% or more and 100% or less, 50% or more and 100% or less, 60% or more and 100% or less, 70% or more and 100% or less, 80% or more and 100% or less, or 90% or more and 100% or less. A large amount of particles having a particle diameter of less than 850 $\mu$m may result in an excessively high density of packing into the column and a high pressure loss during liquid passage. A high proportion of particles having a particle diameter of 850 $\mu$m or more can increase the average space velocity SV. For adjusting the particle size distribution of the cellulose acetate flake according to an embodiment of the present disclosure, classification may be performed using a sieve having an appropriate mesh size.

From the viewpoint of suppressing an increase in pressure loss during liquid passage through the column, a cumulative 50% particle diameter on a mass basis (median diameter: D50), as determined from the particle size distribution of the cellulose acetate flake according to an embodiment of the present disclosure, may be 40 mesh or more, 35 mesh or more, or 30 mesh or more. From the viewpoint of improving the packing density, the cumulative 50% particle diameter (median diameter: D50) may be 10 mesh or less, 12 mesh or less, or 14 mesh or less. The cumulative 50% particle diameter on a mass basis in the present disclosure is defined as a mesh size (mesh) of a sieve when a mass of particles having passed through the mesh is more than 50% of a mass of an entire sample in a sieving test using a sieve as defined in JIS Z8801-1:2006.

A BET specific surface area of the cellulose acetate flake according to an embodiment of the present disclosure may be 1.8 $m^2$/g or more, 2 $m^2$/g or more, 3 $m^2$/g or more, 5 $m^2$/g or more, or 7 $m^2$/g or more, and may be 25 $m^2$/g or less, 20 $m^2$/g or less, or 18 $m^2$/g or less. The BET specific surface area is preferably 1.8 $m^2$/g or more and 25 $m^2$/g or less, more preferably 2 $m^2$/g or more and 20 $m^2$/g or less, even more preferably 3 $m^2$/g or more and 18 $m^2$/g or less, still more preferably 5 $m^2$/g or more and 18 $m^2$/g or less, and even still more preferably 7 $m^2$/g or more and 18 $m^2$/g or less. The BET specific surface area is measured by a BET method using nitrogen gas adsorption in accordance with a method described in JIS Z8831. Details of a measurement method and measurement conditions will be described in the Examples below.

A specific surface area of the cellulose acetate flake generally increases as the particle diameter decreases. Since the cellulose acetate flake according to an embodiment of the present disclosure adsorbs gold ions by a physical interaction as described above, a large specific surface area is advantageous. However, a large specific surface area may result in a decrease in particle diameter and a reduction in ease of liquid passage.

The total pore volume of the cellulose acetate flake according to an embodiment of the present disclosure may be

0.005 cm$^3$/g or more, 0.007 cm$^3$/g or more, 0.009 cm$^3$/g or more, or 0.010 cm$^3$/g or more, and may be 150 cm$^3$/g or less, 10 cm$^3$/g or less, or 1.0 cm$^3$/g or less. The total pore volume is preferably 0.005 cm$^3$/g or more and 150 cm$^3$/g or less, more preferably 0.007 cm$^3$/g or more and 10 cm$^3$/g or less, and even more preferably 0.009 cm$^3$/g or more and 1.0 cm$^3$/g or less. The total pore volume is measured by a nitrogen gas adsorption method. Details of a measurement method and measurement conditions will be described in the Examples below.

The total pore volume of the cellulose acetate flake is associated with the specific surface area and indicates the state of voids at a flake surface. The total pore volume in the present disclosure is a physical property different from the cumulative pore volume as determined by mercury porosimetry. The so-called cumulative pore volume is usually measured using a mercury porosimeter (available from Quantachrome Instruments, PoreMaster60) or the like, and indicates a volume of pores that are large to some extent. On the other hand, the total pore volume of the present disclosure is measured by a gas adsorption method and indicates a volume including even finer voids.

The cellulose acetate flake according to an embodiment of the present disclosure may have a load displacement amount of 10 mm or less when a 10 N load is applied. The load displacement amount is determined by: packing a cylindrical syringe having a 10-ml volume (made of polypropylene and having an internal diameter of 17 mm) with a cellulose flake to form a packed bed having a height of 50 mm; compressing the packed bed at a compression rate of 10 mm/min using a universal tensile tester (trade name "RTG1310" available from A&D Company, Limited); measuring the height of the packed bed when a load of 10 N is applied; and calculating a difference from the height of the packed bed before the compression.

In the present specification, the load displacement amount is an index indicating hardness of the cellulose acetate flake. According to the cellulose acetate flake having a load displacement amount of 10 mm or less when a load of 10 N is applied, even when the cellulose acetate flake is packed into a column at a high density or when a pressure loss during liquid passage is increased, particles are hardly deformed, and thus desired ease of liquid passage can be secured. From the viewpoint of obtaining a high degree of ease of liquid passage, the load deformation amount under a load of 10 N may be 8 mm or less, 6 mm or less, or 4 mm or less, and a lower limit value thereof is 0 mm. The load deformation amount under a load of 10 N of the cellulose acetate flake may be 0 mm or more and 10 mm or less, 0 mm or more and 8 mm or less, 0 mm or more and 6 mm or less, or 0 mm or more and 4 mm or less.

A molecular weight and a molecular weight distribution of the cellulose acetate constituting the cellulose acetate flake are not particularly limited as long as the effects of the present disclosure are obtained. For example, a weight average molecular weight Mw of the cellulose acetate may be 100000 or more, 150000 or more, or 170000 or more, and may be 400000 or less, 300000 or less, or 250000 or less. The weight average molecular weight Mw is preferably 100000 or more and 400000 or less, more preferably 150000 or more and 300000 or less, and even more preferably 170000 or more and 250000 or less.

A molecular weight distribution Mw/Mn defined by the weight average molecular weight Mw and a number average molecular weight Mn of the cellulose acetate is also not particularly limited. For example, the molecular weight distribution Mw/Mn of the cellulose acetate may be 2.0 or more, 2.5 or more, or 3.0 or more, and may be 6.0 or less, or 5.0 or less. The molecular weight distribution Mw/Mn is preferably 2.0 or more and 6.0 or less, more preferably 2.5 or more and 5.0 or less, and even more preferably 3.0 or more and 5.0 or less.

The weight average molecular weight Mw, the number average molecular weight Mn, and the molecular weight distribution Mw/Mn of the cellulose acetate are determined by gel permeation chromatography (GPC) under the following measurement conditions.

Guard column: PolyPore GUARD size 50 × 7.5 mm (Agilent Technologies)
Column: PolyPore size 300 × 7.5 mm × 2 columns (Agilent Technologies)
Desorption liquid: NMP + 0.1 M LiBr
Sample concentration: 0.50% w/v
Injection volume: 50 μL
Column temperature: 55°C
Flow rate: 0.5 mL/min
Detector: RI (differential refractometer)
Apparatus: HPLC Prominence + analysis program Lab Solutions Ver. 5.73 (available from Shimadzu Corporation)
Standard sample: polymethyl methacrylate (M-M-10 set) (Agilent Technologies)

The 6% viscosity of the cellulose acetate constituting the cellulose acetate flake is not particularly limited as long as the effects of the present disclosure are obtained. For example, the 6% viscosity of the cellulose acetate may be 10 mPa·s or more, 50 mPa·s or more, 70 mPa·s or more, or 90 mPa·s or more, and may be 300 mPa·s or less, 200 mPa·s or less, or 150 mPa·s or less. The 6% viscosity of the cellulose acetate constituting the cellulose acetate flake is preferably 10 mPa·s or more and 300 mPa·s or less, more preferably 50 mPa·s or more and 200 mPa·s or less, and even more preferably 70 mPa·s or more and 150 mPa·s or less.

The 6% viscosity of the cellulose acetate is measured using an Ostwald viscometer. Specifically, 3.00 g of a dry sample is dissolved in a solvent to prepare a solution having a cellulose acetate concentration of 6 wt/vol%. A fall time (s) of this solution is measured at 25 ± 1°C using an Ostwald viscometer, and a product of the fall time (s) and a viscometer coefficient is calculated as the 6% viscosity (mPa·s). The viscometer coefficient is determined by a known method using a standard liquid for viscometer calibration.

As described above with respect to various physical properties desirable for obtaining a predetermined average space velocity SV, a cellulose acetate flake having a predetermined average space velocity SV tends to be easily obtained when the flake has a large particle diameter, a large dispersion of particle diameters (i.e., non-uniform particle diameter), a large specific surface area, or a high flake hardness. Specifically, for example, in a case where "the particle diameter is large", "the particle size distribution is small (uniform)", and "pores are not formed or are small, and the total pore volume is small", "the specific surface area is small", "there are no or few substituents exposed on the particle surface, or a hydrophobic portion (skeleton of cellulose) is exposed or the polarity is low", "the hardness is high", or the like, the flow rate tends to be high. On the other hand, in a case where "the particle diameter is small", "the particle size distribution is large (non-uniform)", "the specific surface area is large", "pores are formed or large, or the total pore volume is large", "there are many substituents exposed on the particle surface or the polarity is high", "the hardness is small", or the like, the flow rate tends to be small.

However, a plurality of properties, such as surface area, pore structure, surface polarity, and particle size distribution, vary relative to each other and affect the ease of liquid passage. For example, the specific surface area of the cellulose acetate flake generally increases as the particle diameter decreases. However, even when the particle diameter is small, in a case where pores are not formed or are small, the specific surface area may decrease, as a result. Therefore, in the present disclosure, the cellulose acetate flake was specified not by individually determining an optimum numerical range for each of the properties, but using the average space velocity SV reflecting these property values as an index. That is, the average space velocity SV as determined by a specific method is set to more than 1.0 h$^{-1}$, and thus fine shapes and physical properties such as particle size distribution, pore size and shape, surface hydrophilicity/hydrophobicity, and amounts of changes during column packing (hardness and susceptibility to clogging), which are simultaneously and cooperatively changing properties, are specified, and the cellulose acetate flake according to an embodiment of the present disclosure is obtained.

Method for Producing Cellulose Acetate Flake

A method for producing the cellulose acetate flake according to an embodiment of the present disclosure includes mixing a dope containing cellulose acetate having a degree of acetyl substitution of 0.80 or more and 2.90 or less with a precipitant. Here, the dope means a reaction liquid obtained by using acetic acid as a reaction solvent in synthesis of cellulose acetate (hydrolysis including acetylation). In other words, the dope is also an acetic acid solution with cellulose acetate dissolved. Thus, the dope in an embodiment of the present disclosure may be obtained by dissolving an existing cellulose acetate flake in acetic acid. Note that the cellulose acetate may contain an additional substituent besides the acetyl group as long as the effects of the present disclosure are obtained. Examples of the additional substituent include acyl groups such as a propionyl group, a butyryl group, a pentanoyl (valeryl) group, a hexanoyl group, a heptanoyl group, an octanoyl group, a nonanoyl group, an undecanoyl group, a dodecanoyl group, a tridecanoyl group, a tetradecanoyl (myristoyl) group, a pentadecanoyl group, a hexadecanoyl group, a heptadecanoyl group, and an octadecanoyl (stearoyl) group. In addition, when the dope is dried without mixing with the precipitant, the entire dope is formed in a film shape, and thus it is difficult to suitably produce the cellulose acetate flake according to an embodiment of the present disclosure.

The cellulose acetate flake according to an embodiment of the present disclosure is obtained by bringing the dope into contact with a poor solvent (precipitant) for cellulose acetate to precipitating cellulose acetate. The cellulose acetate flake according to an embodiment of the present disclosure can also be obtained by adjusting precipitation conditions in bringing the dope into contact with the poor solvent to obtain a precipitate at the end of the cellulose acetate synthesis. Bringing the dope into contact with a poor solvent to obtain a precipitate at the end of the cellulose acetate synthesis is known in the art as a method for producing a cellulose acetate flake. However, the cellulose acetate flake according to an embodiment of the present disclosure, i.e., the cellulose acetate flake exhibiting an average space velocity SV, cannot be suitably obtained by the precipitation under commonly used conditions. This is because applications of a typically produced cellulose acetate flake, i.e., cellulose acetate, are cigarette filters, optical films, extrusion-molded articles, and the like. In the production of cigarette filters and optical films, which are the main applications among these ones, a cellulose acetate flake is dissolved in an organic solvent and used. Therefore, the cellulose acetate flake used in these applications is suitably uniform for the purpose of maintaining solubility in an organic solvent. On the other hand, in the case of an embodiment of the present disclosure, a cellulose acetate flake having a large particle diameter, a large dispersion of particle diameters (that is, a non-uniform particle diameter), a large specific surface area, a high flake hardness, or the like is suitable as the cellulose acetate flake exhibiting a predetermined average space velocity SV. For obtaining such a flake, the following precipitation conditions which are different from known conditions are desirable.

Specifically, for example, water is used as the poor solvent for cellulose acetate. In mixing a dope containing cellulose acetate with a precipitant, a precipitate of a flake having a large particle diameter variation and a large specific surface area is obtained by adjusting the concentration of cellulose acetate in the reaction liquid (dope), the temperature of the dope, the temperature of the precipitant (poor solvent), the rate of mixing or dropwise addition of the dope and the precipitant, the stirring time, and the like. As a result, it is possible to obtain a cellulose acetate flake composed of cellulose acetate having a degree of acetyl substitution of 0.80 or more and 2.90 or less and exhibiting an average space velocity SV of more than 1.0 $h^{-1}$ under predetermined conditions.

In mixing a dope containing cellulose acetate with a precipitant, the stirrer to be used may be a biaxial kneader or a magnetic stirrer. From the viewpoint that a flake having a predetermined average space velocity SV is easily obtained, temperatures of the dope and the precipitant before the mixing are preferably low temperatures, more preferably 40°C or lower, even more preferably 30°C or lower, and particularly preferably 25°C or lower. Also, after the dope and the precipitant are mixed, a precipitation temperature (i.e., a temperature of a mixture of the dope and the precipitant) is preferably maintained at 40°C or lower, more preferably 30°C or lower, and even more preferably 25°C or lower. As the temperatures of the dope and the precipitant before the mixing and the precipitation temperature are higher, the value of the average space velocity SV of the obtained cellulose acetate flake tends to be smaller. For example, when any one of the temperatures of the dope and the precipitant before the mixing and the precipitation temperature is significantly higher than 40°C, it is difficult to suitably obtain the flake of the present embodiment.

A method for precipitating cellulose acetate in the dope is not particularly limited as long as a cellulose acetate flake exhibiting an average space velocity SV obtained by the above-described method is obtained. For example, from the viewpoint that a cellulose acetate flake having a desired average space velocity SV is easily obtained, a precipitation rate is preferably made as low as possible. Examples of such a method include a method in which a dope containing cellulose acetate is continuously added dropwise to a precipitant under stirring. By reducing the precipitation rate, a precipitate is formed not only on surfaces of droplets in contact with the precipitant but also from a liquid interface between the precipitant and the dope to the inside of the dope droplets. Therefore, a continuous structure of the dope and the precipitant from the surface to the inside is formed, and a flake having a large specific surface area and a high hardness is obtained.

When the dope containing cellulose acetate is continuously added dropwise to the precipitant under stirring, a concentration of the cellulose acetate in the dope is preferably about 10 mass%. A stirring rate of the precipitant (poor solvent) is preferably as low as possible. By stirring at a low speed, a flake having a larger particle diameter is suitably obtained. For example, when the stirring rate is from 1 to 110 rpm, the cellulose acetate flake of the present embodiment can be suitably obtained. As the stirring rate is higher, the value of the average space velocity SV of the obtained cellulose acetate flake tends to be smaller. It is difficult to suitably obtain the flake of the present embodiment when vigorous stirring is performed at a high speed which is significantly more than 110 rpm. The temperatures of the dope and the precipitant may be 40°C or lower, and is preferably 25°C or lower. In a case where a dope temperature is extremely high in the high-temperature aging and vigorous stirring is performed, the cellulose acetate flake has a small particle diameter and is soft (has a low hardness). Thus, it is difficult to suitably obtain the average space velocity SV of the cellulose acetate flake of the present embodiment. The size of the droplets to be added dropwise is preferably large, and a method of continuous dropwise addition is preferred. The concentration of cellulose acetate in the dope may be reduced by adding, in advance, acetic acid to the dope before dropwise addition to the precipitant. As the precipitant, dilute acetic acid may be used instead of water.

A standing time after the stirring is stopped is preferably 0 minutes, or more than 0 minutes and about 1 hour. When the standing time is about from 0 to 1 hour, the cellulose acetate flake of the present embodiment can be suitably obtained. As the standing time is longer, the value of the average space velocity SV of the obtained cellulose acetate flake tends to be larger. A standing time of significantly more than 1 hour makes it difficult to suitably obtain the flake of the present embodiment.

For obtaining a cellulose acetate flake having a desired average space velocity SV, it is necessary that the rate at which cellulose acetate in the dope is precipitated beyond the limit of solubility is made as low as possible, and that spatial spread of the dope droplets added dropwise to the precipitant (poor solvent) is made as large as possible. The cellulose acetate flake obtained under such conditions has a large specific surface area and a large total pore volume and a small load displacement amount which will be described later in spite of having a large particle diameter. Due to the cellulose acetate flake being formed through such a process, the surface state of the cellulose acetate flake can be made more hydrophilic. This results in a higher average space velocity SV. The cellulose acetate flake having such properties has a desired average space velocity SV and can selectively and efficiently recover gold ions. Industrially, the average space velocity SV of the obtained cellulose acetate flake can be adjusted by appropriately changing the shape, volume and the like of a precipitation tank.

The type of precipitant is not particularly limited as long as the effects of the present disclosure are obtained. The precipitant can be appropriately selected according to the target degree of acetyl substitution. For example, the precipitant may be a poor solvent for cellulose acetate having the degree of acetyl substitution, and may be water, dilute acetic acid or a mixture thereof. A preferred precipitant is dilute acetic acid. A concentration of the dilute acetic acid may be 5 mass% or more or 10 mass% or more, and is preferably from 15 to 35 mass%. As the concentration of the dilute acetic acid is higher, the value of the average space velocity SV of the obtained cellulose acetate tends to be larger. A concentration of the dilute acetic acid of significantly more than 35 mass% makes it difficult to suitably obtain the flake of the present embodiment. The precipitant may contain an organic solvent as long as the effects of the present disclosure are not impaired. However, when the precipitant contains an organic solvent, a predetermined average space velocity SV is less likely to be obtained. In addition, a cellulose acetate having a low degree of substitution highly tends to be precipitated in the form of a powder unless the above-described preferred precipitation method and precipitation conditions are employed. Therefore, for obtaining a cellulose acetate flake having a low degree of substitution, it is necessary to select the precipitation method and precipitation conditions. When the cellulose acetate flake according to an embodiment of the present disclosure is suitably obtained, it is important to appropriately adjust (1) the temperatures of the dope and the precipitant before the mixing, and the precipitation temperature, (2) the stirring rate, (3) the standing time after the stirring is stopped, (4) the concentration of the precipitant (particularly, dilute acetic acid or the like), and the like in combination.

As described above, for obtaining a desired average space velocity SV, a method and conditions which result in a low precipitation rate are preferred. Specifically, a method and conditions which allow for slow mixing of the dope and the precipitant to form a gold ion-adsorbing surface at an outer surface of the flake and to form irregularities at the surface of the flake are preferred. The stirring rate of the dope and the precipitant is preferably low. As the stirring rate of the dope and the precipitant is lower, the particle diameter distribution of the obtained flake is larger. Since high-speed stirring results in a flake having a uniform particle diameter, the value of the average space velocity SV tends to decrease.

The dope containing cellulose acetate having a degree of acetyl substitution of 0.80 or more and 2.90 or less can be obtained by, for example, (a) producing cellulose acetate by reacting cellulose with acetic anhydride in the presence of an acid catalyst and an acetic acid solvent, and (b) hydrolyzing the produced cellulose acetate to adjust the degree of acetyl substitution to 0.80 or more and 2.90 or less.

In (a) producing cellulose acetate, cellulose is reacted with acetic anhydride in the presence of an acid catalyst and an acetic acid solvent to acetylate the cellulose. The cellulose has preferably undergone an activation treatment. Examples of the activation treatment include a method in which acetic acid or an acetic acid containing from 1 to 10 mass% of sulfuric acid (sulfuric acid-containing acetic acid) is added to raw material cellulose in one or two batches.

As the raw material cellulose, wood pulp (softwood pulp, hardwood pulp, or the like), cotton linter or the like can be used. These raw material celluloses may be used alone, or two or more thereof may be used in combination. For example, softwood pulp and cotton linter or hardwood pulp may be used in combination. In the case of using wood pulp, disintegrated pulp obtained by disintegrating the wood pulp into a cotton-like form using a disc refiner or the like may be used.

An $\alpha$-cellulose content of the raw material cellulose may be, for example, 90 mass% or more, 92 mass% or more, 95 mass% or more, or 97 mass% or more.

When the activation treatment is performed by adding acetic acid or an acetic acid containing from 1 to 10 mass% of sulfuric acid (sulfuric acid-containing acetic acid) to the raw material cellulose, from 10 to 500 parts by mass of the acetic acid and/or the sulfuric acid-containing acetic acid can be added relative to 100 parts by mass of the raw material cellulose. The acetic acid or sulfuric acid-containing acetic acid may be added to the raw material cellulose in one batch, the sulfuric acid-containing acetic acid may be added after a certain period of time has elapsed from the addition of the acetic acid, or the acetic acid may be added after a certain period of time has elapsed from the addition of the sulfuric acid-containing acetic acid. The activation treatment may be a method in which the acetic acid and/or sulfuric acid-containing acetic acid is added to the raw material cellulose, and then the mixture is allowed to stand at from 17 to 40°C for from 0.2 to 48 hours, or a method in which the mixture is hermetically sealed and stirred at from 17 to 40°C for from 0.1 to 24 hours.

Examples of the acid catalyst used in the producing cellulose acetate by acetylation of cellulose (preferably, cellulose after the activation treatment) include sulfuric acid. For example, cellulose may be acetylated by adding the cellulose to a mixture of acetic acid, acetic anhydride, and sulfuric acid, or cellulose may be acetylated by adding a mixture of acetic acid and acetic anhydride; and sulfuric acid to the cellulose.

A proportion of acetic anhydride to acetic acid in acetylation may be from 200 to 400 parts by mass of acetic anhydride relative to from 300 to 600 parts by mass of acetic acid, and may be from 240 to 280 parts by mass of acetic anhydride relative to from 350 to 530 parts by mass of acetic acid. A proportion of the mixture of acetic acid and acetic anhydride to the cellulose in the acetylation may be from 500 to 1000 parts by mass of the mixture of acetic acid and acetic anhydride relative to 100 parts by mass of the cellulose. A proportion of sulfuric acid to the cellulose in the acetylation may be from 0.5 to 15 parts by mass, from 5 to 14 parts by mass, or from 7 to 11 parts by mass of concentrated sulfuric acid relative to 100 parts by mass of the cellulose. The acetylation reaction of the cellulose may be performed by starting at from 20 to 55°C and stirring for from 30 minutes to 36 hours from the start of the reaction.

In (b) hydrolyzing the produced cellulose acetate to adjust the degree of acetyl substitution to 0.80 or more and 2.90 or less, for example, in hydrolyzing (saponifying), a neutralizing agent containing water (including water vapor); dilute acetic acid; or a carbonate, acetate, hydroxide, or oxide of calcium, magnesium, iron, aluminum, or zinc; or the like is added to stop the acetylation reaction. The dilute acetic acid refers to a 1 to 50 mass% aqueous solution of acetic acid. The neutralizing agent is preferably magnesium acetate and calcium acetate.

A time of the hydrolysis (saponification) reaction (hereinafter, aging time) is not particularly limited, and the time can be appropriately adjusted according to the target degree of acetyl substitution. Here, the aging time refers to the time from the start of charging the neutralizing agent until the hydrolysis (saponification) reaction is stopped. Increasing the aging time can reduce the degree of acetyl substitution.

A temperature of the hydrolysis (saponification) reaction (hereinafter, aging temperature) is preferably from 50 to 100°C and more preferably from 70 to 90°C, and the reaction is preferably retained at the temperature for from 20 to 120 minutes. Here, the aging temperature refers to the temperature in the reaction system during the aging time.

By adjusting the conditions for the hydrolysis reaction, a dope containing cellulose acetate having a degree of acetyl substitution of 0.80 or more and 2.90 or less is obtained. Mixing the dope with the precipitant under the conditions described above results in a cellulose acetate flake having the properties according to an embodiment of the present disclosure. Here, the dope containing cellulose acetate means a solution in which the cellulose acetate or a mixture containing cellulose acetate is dissolved in a solvent. This mixture is a reaction mixture obtained by the acetylation reaction or hydrolysis reaction.

The dope containing cellulose acetate having a degree of acetyl substitution of 0.80 or more and 2.90 or less may be applied to the mixing the dope with the precipitant, which is precipitation of the cellulose acetate flake described above, and then the precipitated cellulose acetate flake may be separated and dried. Examples of a method for separating the cellulose acetate flake include a method in which the cellulose acetate flake is dehydrated by filtration, centrifugation, or the like. As a method for drying the separated cellulose acetate flake, a known technique such as air drying at a predetermined temperature or drying under reduced pressure can be used. When drying by electromagnetic waves is used in combination, the above-described average space velocity SV may be decreased.

Gold Adsorption Column

A gold adsorption column according to an embodiment of the present disclosure is packed with a cellulose acetate flake having a degree of acetyl substitution of 0.80 or more and 2.90 or less as a filler. By passing a gold-containing solution through this column, gold ions in the solution are selectively adsorbed onto the cellulose acetate flake. The gold ions can be separated and recovered by collecting the cellulose acetate flake having the gold ions adsorbed thereonto and incinerating the flake or dissolving the flake in a good solvent. In addition, the gold ions can be desorbed by collecting the cellulose acetate flake having the gold ions adsorbed onto and mixing the flake with a desorption liquid (for example, water). According to the definition of JIS K0214 (2013), "Technical terms for analytical chemistry (Chromatography part)", the "column" refers to "a tube mainly packed with a filler, in which separation of sample components is performed, or a capillary tube", and the "gold adsorption column" refers to a columnar or cylindrical vessel having an internal diameter and a length, which is packed with a filler having gold adsorption ability. For example, the gold adsorption column according to an embodiment of the present disclosure may be a column in which a liquid introduction part and a liquid discharge part are provided at both ends of a columnar or cylindrical vessel packed with a filler, and the liquid introduction part and the liquid discharge part are sealed and thus air does not flow in from the outside of the column. Since the gold-containing solution or desorption liquid can be passed through the gold adsorption column of this embodiment under pressure, a space velocity SV' which will be described later can be easily adjusted.

From the viewpoint of improving the gold recovery efficiency, a packing fraction of the cellulose acetate flake in the gold adsorption column may be 10% or more, 15% or more, or 18% or more. The packing fraction may be 40% or less. The packing fraction is a ratio of a volume of a space occupied by the filler to a total volume of the column.

From the viewpoint of improving the gold recovery efficiency, the average space velocity SV when a hydrochloric acid solution having a concentration of 2.0 mol/l (temperature: 20°C $\pm$ 5°C) is passed through the gold adsorption column is more than 1.0 h$^{-1}$, and may be 2.0 h$^{-1}$ or more, 10.0 h$^{-1}$ or more, 50 h$^{-1}$ or more, or 80 h$^{-1}$ or more. In addition, from the viewpoint of suppressing an increase in pressure loss during passage of the liquid through the column, the average space velocity SV may be 120 h$^{-1}$ or less or 110 h$^{-1}$ or less.

As long as the effects of the present disclosure are obtained, the material for and size of the column packed with the cellulose acetate flake are not particularly limited. For example, the material for the column may be appropriately selected from a resin, a glass, a metal, and the like. Since the gold-containing solution to be passed through the gold recovery column may contain a strong acid such as aqua regia, an acid-resistant resin or glass is preferred as the material for the column.

An internal diameter of the column may be 2 mm or more, 5 mm or more, 100 mm or more, or 1000 mm or more in consideration of the packing property of the cellulose acetate flake. A length of the column may be 2 mm or more, 20 mm or more, 200 mm or more, or 20000 mm or more in consideration of treatment capacity and suppression of the pressure loss during liquid passage.

Method for Recovering Gold

The method for recovering gold according to an embodiment of the present disclosure includes passing a liquid containing gold ions through the gold adsorption column described above to adsorb the gold ions in the liquid onto the cellulose acetate flake. Specifically, the method for recovering gold according to an embodiment of the present disclosure may include: packing a cellulose acetate flake having a degree of acetyl substitution of 0.8 or more and 2.9 or less into a cylindrical vessel to form a packed column; and passing a liquid containing gold ions through the packed column to adsorb the gold ions onto the cellulose acetate flake.

For example, in the case of a packed column installed with an axial center direction of the column being the vertical direction, a liquid passage direction may be from above or below in the vertical direction. For example, JP 2006-192400 A discloses a column regeneration system in which both the liquid passage direction of an original liquid (liquid to be treated) and the liquid passage direction of a chemical liquid for column regeneration are downward flows. However, in this method, all the gold ions adsorbed onto the cellulose acetate flake in an upper part of the column need to be washed away downward, and thus the efficiency may be lowered. Therefore, the liquid passage directions during the adsorption of gold ions and during the desorption of gold ions may be changed. As long as the effects of the present disclosure are obtained, the direction in which the packed column is installed is not limited to the vertical direction, and the packed column may be installed in a horizontal direction.

From the viewpoint of improving the adsorption efficiency of gold ions by the cellulose acetate flake in the packed column, when the liquid containing gold ions is passed through the packed column, the space velocity SV' is more than 1.0 $h^{-1}$, and may be 2.0 $h^{-1}$ or more, 10.0 $h^{-1}$ or more, 50 $h^{-1}$ or more, or 80 $h^{-1}$ or more. In addition, from the viewpoint of improving the adsorption amount and suppressing the pressure loss during liquid passage, the space velocity SV' may be 120 $h^{-1}$ or less, 110 $h^{-1}$ or less, or 100 $h^{-1}$ or less. In other words, in the method for recovering gold according to an embodiment of the present disclosure, the liquid containing gold ions is preferably passed through the packed column described above at a flow rate at which a space velocity SV' of more than 1 $h^{-1}$ is obtained. For example, the liquid containing gold ions can be passed through the packed column by feeding the liquid containing gold ions using a tube pump connected to the packed column. The space velocity SV' can be adjusted by adjusting a liquid feed rate of the tube pump. From the viewpoint of improving the adsorption efficiency, the liquid may be passed at a space velocity SV' more than the average space velocity SV of the packed cellulose acetate flake, but in this case, the pressure applied to the inside of the column may become excessively high. From the viewpoint of suppression of the pressure loss, the space velocity SV' during liquid passage is preferably in a range of more than 1.0 $h^{-1}$ and 120 $h^{-1}$ or less.

As a method for separating and recovering the gold ions adsorbed onto the cellulose acetate flake as a solid, for example, the cellulose acetate flake having the gold ions adsorbed thereonto may be dissolved in a good solvent, and then an insoluble matter containing gold may be recovered and dried, or the cellulose acetate flake having the gold ions adsorbed thereonto may be incinerated to recover an incineration residue containing gold. That is, the method for recovering gold may further include dissolving or incinerating the cellulose acetate flake having the gold ions adsorbed thereonto. According to need, the insoluble matter or incineration residue may be purified by a known purification means to recover high-purity gold.

Alternatively, according to need, high-purity gold may be recovered by a desorption means. For example, the gold ions can be desorbed from the cellulose acetate flake by charging a desorption liquid such as water into the packed column after adsorption of the gold ions and passing the liquid through the packed column. Alternatively, gold as a solid component may be recovered by adding a reducing agent or the like to the desorption liquid containing the desorbed gold ions to cause precipitation. Furthermore, a gold-containing solution having a concentration higher than that of the original liquid containing gold ions is obtained by using a small amount of the desorption liquid. Therefore, gold can also be recovered by using a process suitable for a high-concentration solution, such as an electrolytic reduction method.

In other words, an embodiment of the present disclosure relates to a method for concentrating a gold solution. This method for concentrating a gold solution includes passing a liquid containing gold ions (original liquid) through the gold adsorption column described above to adsorb the gold ions in the liquid to the cellulose acetate flake, and then passing a desorption liquid to desorb the gold ions adsorbed onto the cellulose acetate flake to obtain a liquid containing gold ions at a concentration higher than that of the original liquid. Specifically, the method for concentrating a gold solution according to an embodiment of the present disclosure includes: packing a cellulose acetate flake having a degree of acetyl substitution of 0.8 or more and 2.9 or less into a cylindrical vessel to form a packed column; passing a liquid containing gold ions as an original liquid through the packed column to adsorb the gold ions onto the cellulose acetate flake; and passing a desorption liquid through the packed column containing the cellulose acetate flake having the gold ions adsorbed thereonto to obtain a liquid containing gold ions at a concentration higher than that of the original liquid.

Examples of the liquid containing gold include a gold-containing solution obtained by collecting a gold-containing material from a discarded electronic device or the like and dissolving the gold-containing material in aqua regia. That is, the method for recovering gold according to an embodiment of the present disclosure may further include preparing the liquid containing gold ions by dissolving or extracting gold from a gold-containing material in aqua regia. The gold-containing material described above generally has a low gold content. The gold ion concentration of the gold-containing solution obtained by dissolving this gold-containing material in aqua regia is also low. Known techniques such as addition of a reducing agent, electrolytic reduction and the like cannot be applied to such a dilute solution due to their low industrial cost effectiveness. On the other hand, the method for recovering gold and the method for concentrating a gold solution according to an embodiment of the present disclosure can also be suitably applied to, for example, a liquid containing gold ions at a concentration of 1000 ppm or less, preferably 800 ppm or less, and more preferably 500 ppm or less. Furthermore, the application of the method for recovering gold and the method for concentrating a gold solution according to an embodiment of the present disclosure makes it possible to efficiently adsorb and recover gold even in a low concentration region where the gold ion concentration is about 5 ppm. Further, gold can be preferentially adsorbed and recovered even from a liquid in which a metal other than gold is present at a concentration that is 200 or more times that of gold. For example, the cellulose acetate flake according to an embodiment of the present disclosure makes it possible to selectively recover gold even from a solution in which some metal elements such as Li, Be, B, Na, Mg, Al, Si, P, K, Ca, Sc, Ti, V, Cr, Mn, Fe, Co, Ni, Cu, Zn, Ga, Ge, As, Se, Rb, Sr, Y, Zr, Nb, Mo, Ru, Rh, Pd, Ag, Cd, In, Sn, Sb, Te, Cs, Ba, Hf, Ta, W, Re, Os, Ir, Pt, Ti, Pb, Bi, La, Ce, Pr, Nd, Sm, Eu, Gd, Tb, Dy, Ho, Er, Tm, Yb, Lu, and Th coexist in addition to gold (Au). Furthermore, the method for recovering gold and the method for concentrating a gold solution according to an embodiment of the present disclosure can also be applied even to a liquid containing as many as 67 types of metal elements (Li, Be, B, Na, Mg, Al, Si, P, K, Ca, Sc, Ti, V, Cr, Mn, Fe, Co, Ni, Cu, Zn, Ga, Ge, As, Se, Rb, Sr, Y, Zr, Nb, Mo, Ru, Rh, Pd, Ag, Cd, In, Sn, Sb, Te, Cs, Ba, Hf, Ta, W, Re, Os, Ir, Pt, Au, Ti, Pb, Bi, La, Ce, Pr, Nd, Sm, Eu, Gd, Tb, Dy, Ho, Er, Tm, Yb, Lu, and Th). According to the present disclosure, gold can be efficiently recovered from discarded electronic components, processing wastes of decorative articles, waste catalysts, and the like.

Examples

The present disclosure will next be specifically described with reference to Examples, but the technical scope of the present disclosure is not limited by these Examples. Unless otherwise specified, test temperatures are room temperatures.

The degree of acetylation AV, the degree of acetyl substitution DS, the weight average molecular weight Mw, and the 6% viscosity described in Examples and Comparative Examples below were measured by the methods described above. The other physical properties were evaluated by the following methods.

Morphological Observation

Appearance shapes of Examples and Comparative Examples were confirmed by observation with a scanning electron microscope (E-1030 Model Hitachi Ion Sputter, available from Hitachi).

Particle size: 20 mesh-on

A sieving test was performed in accordance with JIS Z8801-1:2006. That is, the proportion (%) of particles having a particle diameter of 850 $\mu$m or more was determined by using a sieve having a nominal mesh size of 850 $\mu$m, a tolerance of maximum mesh size of 127 $\mu$m, a tolerance of average mesh size of 29 $\mu$m, a maximum wire diameter of 580 $\mu$m, and a minimum wire diameter of 430 $\mu$m. Specifically, JIS test sieves and receiving pans having mesh sizes of 4000 $\mu$m (5 mesh), 1700 $\mu$m (10 mesh), 1000 $\mu$m (16 mesh), 850 $\mu$m (20 mesh), and 500 $\mu$m (32 mesh) were prepared. First, the sieve having a mesh size of 4000 $\mu$m was attached to a Ro-Tap machine (available from Sieve Factory Iida Co., Ltd., tapping: 156 times/min, rolling: 290 times/min), and 100 g of a sample was charged into the sieve and oscillated for 5 minutes. Then, the sample on the receiving pan was collected. This sample was charged into the sieve having a mesh size of 1700 $\mu$m and sieved under the same conditions. Similarly, the sample was sequentially sieved through the sieves having mesh sizes of 1000 $\mu$m, 850 $\mu$m, and 500 $\mu$m, and then the mass of the sample on each of the sieves having mesh sizes of 4000 $\mu$m, 1700 $\mu$m, 1000 $\mu$m, 850 $\mu$m, and 500 $\mu$m was measured. A particle size distribution was created using the proportion of the mass of the sample on each sieve to the total mass (100 g) subjected to the sieving test and the mesh size of each sieve. In this particle size distribution, the total mass of the samples on the sieves having mesh sizes of 4000 $\mu$m, 1700 $\mu$m, 1000 $\mu$m, and 850 $\mu$m was determined, and the proportion (%) to the total mass (100 g) was calculated and defined as the proportion of particles having a particle diameter of 850 $\mu$m or more (20 mesh-on). Similarly, a sieving test was performed using a JIS test sieve having a mesh size of 106 $\mu$m (150 mesh), the mass of the sample passing through the sieve was measured, and the proportion (%) to the total mass (100 g) was calculated and defined as the proportion of particles having a particle diameter of less than 106 $\mu$m (150 mesh-pass).

BET Specific Surface Area and Total Pore Volume

The BET specific surface area ($m^2/g$) and total pore volume ($cm^3/g$) were measured by a nitrogen gas adsorption method in accordance with the description of JIS Z8831. Belsorp max (available from BEL JAPAN INC.) was used as a measuring apparatus, and a sample was pretreated at 100°C for 60 minutes and then measured. The flake sample and the powder sample were measured in an amount of 0.04 g, and a fibrous (cotton-like) sample was measured in an amount of 0.2 g.

Load Displacement Amount

A cylindrical syringe having a 10-ml volume (made of polypropylene and having an internal diameter of 17 mm) was installed with its axial direction being the vertical direction, and the sample was packed from the bottom surface of the syringe up to a height of 50 mm to form a packed bed. This packed bed was compressed at a compression rate of 10 mm/min using a universal tensile tester (trade name "RTG1310" available from A&D Company, Limited), and a height H1 (mm) of the packed bed under a load of 10 N was measured. A difference H2 - H1 of the height H1 from a height H2 (mm) of the packed bed before the compression was calculated. An average of five measurements was taken as the load displacement amount (mm).

Column Property: Measurement of Average Space Velocity SV by Liquid Passage Test

A glass column with a cock (available from Asahi Seisakusho Co., Ltd., internal diameter: 10 mm) was installed in a state where the cock was fully opened with an axial center direction of the column being the vertical direction, and about 0.5 g of a filler (for example, cellulose acetate flake) was allowed to naturally drop up to a height of 2.0 cm from the bottom surface of the column to prepare a packed column. In detail, the filler was charged into the column in about three portions, and packed up to a height of 2.0 cm from the bottom surface of the column while tapping the side surface of the column by hand every time the filler was charged. A hydrochloric acid solution having a concentration of 2.0 mol/l was charged from an upper end of the column at a liquid feed rate of 3.1 g/min using a tube pump ("Tubing pump 1973" available from AS ONE Corporation).

After the start of operation of the tube pump was started, and the hydrochloric acid solution having a concentration of 2.0 mol/l reached the upper end of the column, eluents flowing out from a lower end of the column at from 0 to 2 minutes, from 2 to 4 minutes, and from 4 to 6 minutes were each collected and weighed. At the liquid feed rate of 3.1 g/min, no pressure was applied during liquid passage, and the hydrochloric acid solution flowed down in the column under atmospheric pressure. The flow rate per minute (g/min) was determined from an average of amounts of the eluents collected three times. Similarly, a liquid passage amount per hour ($m^3/h$) was calculated and divided by a volume ($m^3$) of a space occupied by the filler packed in the column to calculate the average space velocity SV ($h^{-1}$). Here, a volume V ($m^3$) of the filler was calculated as a product of the cross-sectional area ($m^2$) of the column and the height (m) of the filler. Specifically, the volume V was expressed as follows: $V = (0.005 \times 0.005 \times \pi) \times 0.02 = 1.57 \times 10^{-6}$ ($m^3$). In Tables 1 to 4 below, "1.57E-6" means $1.57 \times 10^{-6}$ described above.

Adsorption Test and Desorption Test

First, a salt of each metal was dissolved in a hydrochloric acid solution or hydrochloric acid-nitric acid mixed solution having a concentration (mol/l) as shown in Table 5 below so that the concentration (ppm) was as shown in Table 5 below, thereby preparing test liquids A to E. Examples of each metal described above include gold (Au), platinum (Pt), iron (Fe), zinc (Zn), aluminum (Al), chromium (Cr), copper (Cu), titanium (Ti), lead (Pb), palladium (Pd), nickel (Ni), tin (Sn), and iridium (Ir).

Next, a packed column was prepared in the same manner as in the above-described liquid passage test. The above-described tube pump was connected to the packed column, the operating conditions of the pump were adjusted so that the space velocity SV' was 1.0 ($h^{-1}$). The eluent flowing out from the packed column was collected from 0 to 3 hours after liquid passage. For maintaining the space velocity SV' at 1.0 ($h^{-1}$), the inside of the column was pressurized. The test liquid was passed through the column in a pressurized state. Thereafter, the concentrations (ppm) of the respective metal ions in the collected eluents were measured using an ICP emission spectrometer (Agilent 5110, available from Agilent Technologies).

A percentage of adsorption A (%) of each of the metals was calculated by the following equation, with the concentration (ppm) of the metal ions in the eluent being taken as C1 and the concentration (ppm) of the metal ions in the test liquid before passage of the liquid through the column being taken as C2.

$$A\,(\%) = (C2 - C1)/C2 \times 100$$

The amount of the collected eluent was defined as N1 (ml), and the amount (mg) of gold (Au) adsorbed onto the packed column was calculated from the concentration C2 (ppm) in the test liquid before passage of the liquid through the column and the percentage of adsorption A (%).

Thereafter, a desorption test was performed by feeding distilled water as a desorption liquid instead of the test liquid. During feed of the desorption liquid, the operating conditions of the pump were adjusted so that the average space velocity SV was 1.0 ($h^{-1}$). The desorption liquid flowing out from the packed column was collected, and the concentration (ppm) of the metal ions in the desorption liquid was measured by the above-described method.

A percentage of desorption B (%) of each of the metals was calculated by the following equation using the amount N1 (ml) of the eluent collected in the adsorption test and the concentration C1 (ppm) of the metal ions in the eluent, with the amount of the desorption liquid collected being taken as N2 (ml) and the concentration of the metal ions in the desorption liquid being taken as C3 (ppm).

$$B\,(\%) = (C3 \times N2 \times 0.001)/(C1 \times N1 \times 0.001) \times 100$$

The results using the test liquid A are shown in Tables 6 to 8 below. The results using the test liquid B are shown in Tables 9 to 11 below. The results using the test liquid C are shown in Tables 12 to 14 below. The results obtained by collecting the eluents flowing out from the packed column from 0 to 1 hours, from 1 to 2 hours, and from 2 to 3 hours after liquid passage using the test liquid D are shown in Table 15 below. The results obtained by changing the space velocity SV' during liquid passage to 5.0 $h^{-1}$, 10.0 $h^{-1}$, and 20.0 $h^{-1}$ and collecting the eluents flowing out from the packed column from 0 to 0.5 hours after liquid passage using the test liquid E are shown in Table 16 below.

Comparative Example 1

As Comparative Example 1, cellulose acetate (trade name "L-50" available from Daicel Corporation) of Example 1 of JP 2014-109064 A (Patent Document 2) was used. This cellulose acetate was powdery and had a degree of substitution of 2.5, a weight average molecular weight (Mw) of 200000, and a molecular weight distribution (Mw/Mn) of 5.0. When the cellulose acetate of Comparative Example 1 was subjected to a sieving test using a 150-mesh JIS sieve, all powders passed through 150 mesh. In addition, the results obtained by measuring the respective physical properties described above and performing a liquid passage test and an adsorption test are shown in the following tables. In the tables, the "< 1" for the load displacement amount indicates less than 1 mm. In the liquid passage test and adsorption test of Comparative Example 1, the test liquid overflowed from the column immediately after the start of operation of the tube pump, and thus the liquid could not be passed.

Example 1

Cellulose acetate of Comparative Example 1 (trade name "L-50" available from Daicel Corporation, degree of substitution: 2.5, weight average molecular weight (Mw): 200000, molecular weight distribution (Mw/Mn): 5.0) was dissolved in acetic acid to prepare 40 ml of a dope having a concentration of 20 wt.%. Next, 120 ml of dilute acetic acid having a concentration of 20 wt.% was prepared as a poor solvent (precipitant). The dope (40 ml) was slowly added into the poor solvent which was stirred at 10 rpm using a low-speed stirrer and adjusted to a temperature of 20°C, and the mixture was stirred for 10 minutes. Thereafter, stirring was stopped and the mixture was allowed to stand for 40 minutes to cure cellulose acetate flakes to the inside thereof. The obtained flakes were washed and dried to obtain a cellulose acetate flake of Example 1. With respect to the obtained cellulose acetate, the results obtained by measuring the respective physical properties described above and performing a liquid passage test and an adsorption test are shown in the following tables. The microscopic observation verified that Example 1 was in the form of flakes having a width of from 0.1 to 1 mm and a thickness of from 0.05 to 0.1 mm.

Examples 2 to 4

Cellulose acetate having a degree of substitution of 2.5 and a 6% viscosity of 70 (mPa·s) was dissolved in acetic acid to prepare 40 ml of a dope having a concentration of 10 wt.%. Next, dilute acetic acid having a concentration of 10 wt.% was prepared as a poor solvent (precipitant). The entire amount of the dope was added dropwise from a 200-ml measuring pipette into the poor solvent which was stirred at 100 rpm using a magnetic stirrer and adjusted to a temperature of 25°C.

In Examples 2 and 4, stirring was stopped and the mixture was allowed to stand for 30 minutes to cure cellulose acetate flakes to the inside thereof. The obtained flakes were each washed and then dried to obtain cellulose acetate flakes of Examples 2 and 4. The microscopic observation verified that Example 2 was in the form of flakes having a width of from 0.1 to 0.17 mm and a thickness of from 0.05 to 0.1 mm.

In Example 3, stirring was stopped and the mixture was allowed to stand for 40 minutes to cure cellulose acetate flakes to the inside thereof. The obtained flakes were washed and dried, and then sieved using a JIS sieve. The flakes having a particle diameter of 20 mesh-on were partially removed and mixed with the flakes having a particle diameter of 20 mesh-pass so that the proportion of the flakes having a particle diameter of 20 mesh-on was 10 wt.%, thereby obtaining cellulose acetate flakes of Example 3. All the cellulose acetate flakes of Examples 2 to 4 had a 150 mesh-pass amount of less than 1%. In addition, the results obtained by measuring the respective physical properties described above and performing a liquid passage test and an adsorption test are shown in the following tables.

Comparative Example 2

As Comparative Example 2, cellulose acetate in the form of a fiber bundle of Example 12 of JP 2014-109064 A (Patent Document 2) was used. Specifically, a dope in which cellulose acetate (trade name "L-50" available from Daicel Corporation) was dissolved was used to perform spinning by a dry spinning method to obtain cellulose acetate in the form of a long-fiber bundle having a single fineness of 0.9 denier and a total fineness of 20000. Comparative Example 2 was a long-fiber bundle, and thus particle size measurement by sieving could not be performed. The results obtained by measuring the respective physical properties described above and performing a liquid passage test and an adsorption test are shown in the following tables. In Comparative Example 2, the liquid was passed for several minutes from the start of operation of the tube pump, but when the operation was continued thereafter, the test liquid overflowed from the column, and thus the test could not be continued.

Examples 5 to 7

Cellulose acetate of Comparative Example 1 (trade name "L-50" available from Daicel Corporation) was dissolved in acetic acid to prepare 40 ml of a dope having a concentration of 20 wt.%. Next, dilute acetic acid having a concentration of 30 wt.% was prepared as a poor solvent (precipitant). The entire amount of the dope was added dropwise from a 200-ml measuring pipette into the poor solvent which was stirred at 100 rpm using a magnetic stirrer and adjusted to a temperature of 25°C. After stirring was stopped, the mixture was allowed to stand for 40 minutes to cure cellulose acetate flakes to the inside thereof. The obtained flakes were washed and dried, and then sieved using a JIS sieve. The flakes having a particle diameter of 20 mesh-on were partially removed and mixed with the flakes having a particle diameter of 20 mesh-pass so that the proportion of the flakes having a particle diameter of 20 mesh-on was as shown in Table 2 below, thereby obtaining cellulose acetate flakes of Examples 5 to 7. All the cellulose acetate flakes had a proportion of the flakes having a particle diameter of 150 mesh-pass of less than 1%. The results obtained by measuring the respective physical properties described above and performing a liquid passage test and an adsorption test are shown in the following tables.

Example 8

Cellulose acetate flakes were precipitated in the same manner as in Example 5 except that the standing time after the stirring was stopped was changed to 20 minutes. The obtained flakes were washed and dried, and then pulverized using a Makino pulverizer (available from MAKINO MFG. Co., Ltd., model number: DD-2-3.7) to obtain cellulose acetate flakes of Example 8. The pulverization conditions were a rotation speed of 2450 rpm and a screen diameter of $\varphi$ 5.0 mm. According to the JIS sieving test, the proportion of the flakes having a particle diameter of 20 mesh-on was 19 wt.%, and the proportion of the flakes having a particle diameter of 150 mesh-pass was 11%. The results obtained by measuring the respective physical properties described above and performing a liquid passage test and an adsorption test are shown in the following tables.

Example 9 and Comparative Example 7

To 1 part by mass of cellulose acetate (trade name "L-50" available from Daicel Corporation), 5.1 parts by mass of acetic acid and 2.0 parts by mass of water were added. The mixture was stirred for 3 hours to dissolve the cellulose acetate. After 0.13 parts by mass of sulfuric acid was added to the solution, the solution temperature was retained at 70°C in Example 9 and at 95°C in Comparative Example 7 to perform hydrolysis. For the purpose of preventing the cellulose acetate from precipitating during the hydrolysis, water was added to the system in two portions. Specifically, after 1 hour, 0.67 parts by mass of water was added to the system over 5 minutes. After an additional 3 hours, 1.33 parts by mass of water was added to the system over 10 minutes, and then the reaction was further continued at 70°C for 7 hours in Example 9 and at 95°C for 2.5 hours in Comparative Example 7.

The temperature of the reaction liquid after the hydrolysis was performed was cooled to room temperature (about 25°C), and 15 parts by weight of a precipitating solvent (methanol) was added to the reaction mixture to form a precipitate.

The precipitate was collected as a wet cake with a solid content of 15 wt.%. 8 parts by weight of methanol was added, and the precipitate was subjected to liquid removal to a solid content of 15 wt.% and thus washed. The procedures were repeated three times. The washed precipitate was further washed twice with 8 parts by weight of methanol containing 0.004 wt.% of potassium acetate, neutralized, and dried to obtain a cellulose acetate having a low degree of substitution.

For obtaining flakes from the cellulose acetate having a low degree of substitution thus obtained, pyridine was added to the cellulose acetate so that the amount was 20 wt.%, thereby preparing a concentrated solution. In an Erlenmeyer flask, 100 mL of methanol was placed. The concentrated pyridine solution and methanol were cooled to an extent that condensation did not occur, and 5 mL of the cooled concentrated pyridine solution was gently added to the cooled methanol. After completion of the addition, flakes were precipitated by stirring the mixture with a chemistirrer. The obtained flakes were washed with water and dried to obtain cellulose acetate flakes of Example 9 and Comparative Example 7. The results obtained by measuring the respective physical properties described above and performing a liquid passage test and an adsorption test are shown in the following tables. In the liquid passage test and adsorption test of Comparative Example 7 and Example 9, the flakes were dissolved after the start of operation of the tube pump, and thus the liquid could not be passed.

Example 10

Cellulose acetate (degree of substitution: 2.50, trade name "L-50" available from Daicel Corporation) was dissolved in acetic acid to prepare 40 ml of a dope having a concentration of 20 wt.%. Next, 120 ml of dilute acetic acid having a concentration of 20 wt.% was prepared as a poor solvent (precipitant). The dope (40 ml) was slowly added into the poor solvent which was stirred at 100 rpm using a stirrer and adjusted to a temperature of 20°C, and the mixture was stirred for 10 minutes. Thereafter, stirring was stopped, and the precipitated cellulose acetate flakes were immediately washed with water, separated by filtration, and dried to obtain cellulose acetate flakes of Example 10. The results obtained by measuring the respective physical properties described above and performing a liquid passage test and an adsorption test are shown in the following tables.

Comparative Example 3

Cellulose acetate flakes were prepared in accordance with Comparative Example 1 of JP 2017-52961 A. Specifically, a hardwood prehydrolysis kraft pulp with an $\alpha$-cellulose content of 98.4 wt.% was disintegrated with a disc refiner into a cotton-like form. Onto 100 parts by mass of disintegrated pulp (water content of 8%), 26.8 parts by mass of acetic acid was sprayed. The mixture was well stirred and then activated as a pretreatment by allowing the mixture to stand for 60 hours (activation).

The activated pulp was added to a mixture of 323 parts by mass of acetic acid, 245 parts by mass of acetic anhydride, and 13.1 parts by mass of sulfuric acid. The mixture was cooled to 5°C in advance. The temperature was adjusted from 5°C to a maximum temperature of 40°C over 40 minutes, and acetylation was performed for 90 minutes from the time point at which the pulp was added to the mixture. Thereafter, a neutralizing agent (24% aqueous magnesium acetate solution) was added over 3 minutes, and thus the sulfuric acid amount (sulfuric acid amount for aging) was adjusted to 2.5 parts by mass. Furthermore, the temperature of the reaction bath was raised to 75°C, then water was added, and the concentration of moisture in the reaction bath (moisture for aging) was adjusted to 52 mol%. Aging was performed at 85°C for 100 minutes, magnesium acetate was added to neutralize sulfuric acid to terminate the aging, and a reaction mixture containing cellulose acetate, i.e., a dope, was obtained.

To a commercial mixer (available from Panasonic, model number: MX-152SP-W) were added 1200 parts by mass of dilute acetic acid (10 wt.%) at a temperature of 20°C and 400 parts by mass of the reaction mixture containing cellulose acetate (dope temperature: 85°C). The mixture was stirred for 4 seconds with the mixer, and precipitation was caused. The temperature of the poor solvent at this time was about 37°C. The precipitated cellulose acetate was immediately washed with water, separated by filtration, and dried to obtain cellulose acetate flakes of Comparative Example 3. The results obtained by measuring the respective physical properties described above and performing a liquid passage test and an adsorption test are shown in the following tables.

Comparative Examples 4 and 6

Cellulose acetate flakes were precipitated in the same manner as in Example 5 except that the temperature of the poor solvent (precipitant) was adjusted to 30°C and that the standing time after the stirring was stopped was changed to 20 minutes. The obtained flakes were washed and dried, and then pulverized using a Makino pulverizer (available from MAKINO MFG. Co., Ltd., model number: DD-2-3.7) to obtain cellulose acetate flakes of Comparative Examples 4 and 6.

The pulverization conditions were a rotation speed of 2450 rpm and a screen diameter of φ 5.0 mm. The pulverization time was adjusted so that the proportions of the particle diameters of 20 mesh-on and 150 mesh-pass according to the JIS sieving test were as shown in Table 3 below. As a result, in Comparative Example 6, the proportion of 20 mesh-on was 1.9 wt.% and the proportion of 150 mesh-pass was 10%, and in Comparative Example 4, the proportion of 20 mesh-on was 0.5 wt.% and the proportion of 150 mesh-pass was 15%. The results obtained by measuring the respective physical properties described above and performing a liquid passage test and an adsorption test are shown in the following tables.

Comparative Example 5

In Comparative Example 5, cellulose acetate in the form of a fiber bundle of Example 12 of JP 2014-109064 A (Patent Document 2) was used, as in Comparative Example 2. However, at the time of the liquid passage test and the adsorption test, the amount of the cellulose acetate packed into the column was changed to 0.01 g. The results obtained by measuring the respective physical properties described above and performing the liquid passage test and adsorption test with the amount of the packed cellulose acetate being 0.01 g are shown in the following tables.

Comparative Example 8

In Comparative Example 8, powdery cellulose acetate propionate (degree of acetyl substitution: 0.07, degree of propyl substitution: 1.91, total degree of substitution: 1.98) was used instead of cellulose acetate. The results obtained by measuring the respective physical properties described above and performing a liquid passage test are shown in the following tables.

Comparative Example 9

In Comparative Example 9, cellulose acetate flakes were prepared according to the production method of Comparative Example 5 of JP 2017-052961 A. The cellulose acetate flakes obtained had a degree of acetylation AV of 53.9%, a 6% viscosity of 87 mPa·s, and a proportion of particles having a particle diameter of 500 μm or more of 99.0 wt.%. In Comparative Example 5 of JP 2017-052961 A, no dope temperature (poor solvent temperature) was disclosed, and thus a dope temperature of 60°C was adopted as a technical standard. The ground for 60°C is found in the description of the dope temperature of from 60 to 80°C in "Cellulose acetate property and application" used as a textbook in the art. The results obtained by measuring the respective physical properties described above and performing a liquid passage test in this Comparative Example 9 as reproduction of Comparative Example 5 of JP 2017-052961 A are shown in the tables below.

Comparative Example 10

In Comparative Example 10, cellulose acetate flakes were prepared according to the production method of Comparative Example 6 of JP 2017-052961 A. As in Comparative Example 9, the dope temperature was 60°C. The cellulose acetate flakes obtained had a degree of acetylation AV of 55.4%, a 6% viscosity of 75 mPa·s, and a proportion of particles having a particle diameter of 500 μm or more of 98.0 wt.%. The results obtained by measuring the respective physical properties described above and performing a liquid passage test in this Comparative Example 10 as reproduction of Comparative Example 6 of JP 2017-052961 A are shown in the tables below.

Comparative Example 11

In Comparative Example 11, the same operation as in Example 4 of WO 2014/142166 was performed, and a precipitate was obtained. This precipitate was subjected to the same operation as in Example 4 of WO 2014/142166, and cellulose acetate having a low degree of substitution was obtained. The resulting precipitate and cellulose acetate having a low degree of substitution were in the form of a powder. With respect to the obtained cellulose acetate having a low degree of substitution, the results obtained by measuring the respective physical properties described above and performing a liquid passage test are shown in the following tables.

Comparative Example 12

Cellulose acetate flakes were prepared in the same manner as in Example 1 of WO 2018/139319. In Comparative Example 12, cellulose acetate flakes obtained through pulverization (paragraph [0104] of WO 2018/139319) and immersion (paragraph [0106] of WO 2018/139319) were used. The obtained cellulose acetate flakes were considerably fine as flakes, and were substantially powdery. The results obtained by measuring the respective physical properties described above and performing a liquid passage test are shown in the following tables.

Comparative Example 13

In Comparative Example 13, cellulose acetate was obtained in the same manner as in Example 1 of JP 2021-161320 A. Specifically, during hydrolysis, the reaction mixture was transferred to a pressure proof vessel, 98 parts by weight of warm water at about 90°C was added, and the mixture was mixed. The reaction mixture was heated by irradiation with microwaves (Monowave 100 available from Anton Paar, frequency: 2455 MHz) from the outside of the pressure proof vessel, and reached 148°C in 90 minutes and retained at 148°C for 12 minutes (deacylation). The dope temperature after completion of the deacylation was about 100°C although it was released to the atmospheric pressure. The reaction product (dope) at 100°C was added to a large amount of an aqueous dilute acetic acid solution under vigorous stirring to separate flake-shaped cellulose acetate. The flake-shaped cellulose acetate was then sufficiently washed with water and dried, and a product was obtained. The obtained cellulose acetate had a degree of acetylation of 55.2% (total degree of acetyl substitution: 2.43) and a 6% viscosity of 95 mPa·s. The resulting flakes were of fine particle size. The results obtained by measuring the respective physical properties described above and performing a liquid passage test are shown in the following tables.

Comparative Example 14

In Comparative Example 14, cellulose acetate was precipitated in the same manner as in Comparative Example 1 of JP 2018-119052 A. The precipitated cellulose acetate was washed with water, immersed in an aqueous dilute calcium hydroxide solution (20 ppm), separated by filtration, dried, and pulverized using a Makino pulverizer (available from MAKINO MFG. Co., Ltd., model number: DD-2-3.7). The pulverization conditions were a rotation speed of 2450 rpm and a screen diameter of $\varphi$ 5.0 mm. The obtained powdery cellulose acetate had a degree of acetylation AV of 55.8% and a 6% viscosity of 110 mPa·s. The results obtained by measuring the respective physical properties described above and performing a liquid passage test are shown in the following tables.

[Table 1]

| Table 1 (physical properties) | | | | | | | |
|---|---|---|---|---|---|---|---|
| | | Comparative Example 1 | Example 1 | Example 2 | Comparative Example 2 | Example 3 | Example 4 |
| Shape | [-] | Powder | Flakes | Flakes | Cotton-like | Flakes | Flakes |
| Degree of acetylation AV | [%] | 56.2 | 56.2 | 56.2 | 56.2 | 56.2 | 56.2 |
| Degree of acetyl substitution DS | [-] | 2.50 | 2.50 | 2.50 | 2.50 | 2.50 | 2.50 |
| Mw | | 200000 | 200000 | 183000 | 200000 | 183000 | 183000 |
| 6% Viscosity | [mPa·s] | 110 | 110 | 70 | 110 | 70 | 70 |
| Particle size (20 mesh-on) | [wt.%] | 0 | 80 | 70 | - | 10 | 50 |
| Particle size (150 mesh-pass) | [wt.%] | 100 | < 1 | < 1 | - | < 1 | < 1 |
| BET specific surface area | [m²/g] | 6.11 | 3.74 | 10.71 | 0.48 | 11.77 | 17.97 |
| Total pore volume | [cm³/g] | 0.036 | 0.009 | 0.057 | 0.002 | 0.117 | 0.084 |
| Load displacement amount (10 N) | [mm] | < 1 | 6.0 | 2.0 | 24.0 | 1.0 | 1.5 |

(continued)

| Column property | | | | | | | |
|---|---|---|---|---|---|---|---|
| Flow rate | [g/min] | N.D. | 2.753 | 2.817 | N.D. | 2.262 | 2.383 |
| Filler volume | [m³] | 1.57E-06 | 1.57E-06 | 1.57E-06 | 1.57E-06 | 1.57E-06 | 1.57E-06 |
| Average space velocity SV | [h⁻¹] | 0.0 | 105.2 | 107.6 | 0.0 | 86.4 | 91.0 |

[Table 2]

| Table 2 (physical properties) | | | | | | | |
|---|---|---|---|---|---|---|---|
| | | Example 5 | Example 6 | Example 7 | Example 8 | Example 9 | Example 10 |
| Shape | [-] | Flakes | Flakes | Flakes | Flakes | Flakes | Flakes |
| Degree of acetylation AV | [%] | 56.2 | 56.2 | 56.2 | 56.2 | 34.0 | 56.2 |
| Degree of acetyl substitution DS | [-] | 2.50 | 2.50 | 2.50 | 2.50 | 1.21 | 2.50 |
| Mw | | 200000 | 200000 | 200000 | 200000 | 200000 | 200000 |
| 6% Viscosity | [mPa·s] | 110 | 110 | 110 | 110 | 110 | 110 |
| Particle size (20 mesh-on) | [wt.%] | 50 | 80 | 100 | 19 | 80 | 90 |
| Particle size (150 mesh-pass) | [wt.%] | < 1 | < 1 | < 1 | 11 | < 1 | < 1 |
| BET specific surface area | [m²/g] | 4.29 | 3.43 | 1.89 | 10.12 | 8.35 | 7.50 |
| Total pore volume | [cm³/g] | 0.025 | 0.020 | 0.011 | 0.117 | 0.077 | 0.090 |
| Load displacement amount (10 N) | [mm] | < 1 | < 1 | < 1 | 6.0 | 6.0 | 10.0 |
| Column property | | | | | | | |
| Flow rate | [g/min] | 0.039 | 0.052 | 0.785 | 1.309 | 2.753 | 2.094 |
| Filler volume | [m³] | 1.57E-06 | 1.57E-06 | 1.57E-06 | 1.57E-06 | 1.57E-06 | 1.57E-06 |
| Average space velocity SV | [h⁻¹] | 1.5 | 2.0 | 30.0 | 50.0 | 105.2 | 80.0 |

[Table 3]

| Table 3 (physical properties) | | | | | | |
|---|---|---|---|---|---|---|
| | | Comparative Example 3 | Comparative Example 4 | Comparative Example 5 | Comparative Example 6 | Comparative Example 7 |
| Shape | [-] | Flakes | Flakes | Cotton-like | Flakes | Flakes |
| Degree of acetylation AV | [%] | 53.8 | 56.2 | 56.2 | 56.2 | 23.0 |
| Degree of acetyl substitution DS | [-] | 2.33 | 2.50 | 2.50 | 2.50 | 0.75 |
| Mw | | 192000 | 200000 | 200000 | 200000 | - |
| 6% Viscosity | [mPa·s] | 87 | 110 | 110 | 110 | 185 |

(continued)

| Table 3 (physical properties) | | | | | | |
|---|---|---|---|---|---|---|
| | | Comparative Example 3 | Comparative Example 4 | Comparative Example 5 | Comparative Example 6 | Comparative Example 7 |
| Particle size (20 mesh-on) | [wt.%] | 90 | 0.5 | - | 1.9 | 80 |
| Particle size (150 mesh-pass) | [wt.%] | < 1 | 15 | - | 10 | < 1 |
| BET specific surface area | [m$^2$/g] | 3.78 | 6.10 | 0.48 | 5.74 | 5.45 |
| Total pore volume | [cm$^3$/g] | 0.590 | 0.059 | 0.002 | 0.009 | 0.060 |
| Load displacement amount (10 N) | [mm] | 10.0 | 6.0 | 24.0 | 6.0 | 2.0 |
| Column property | | | | | | |
| Flow rate | [g/min] | 0.026 | 0.024 | 3.011 | 0.026 | N.D. |
| Filler volume | [m$^3$] | 1.57E-06 | 1.57E-06 | 1.57E-06 | 1.57E-06 | 1.57E-06 |
| Average space velocity SV | [h$^{-1}$] | 1.0 | 0.9 | 115.0 | 1.0 | 0.0 |

[Table 4]

Table 4 (physical properties)

| | | Comparative Example 8 | Comparative Example 9 | Comparative Example 10 | Comparative Example 11 | Comparative Example 12 | Comparative Example 13 | Comparative Example 14 |
|---|---|---|---|---|---|---|---|---|
| Shape | | Powder | Flakes | Flakes | Powder | Powder | Flakes | Powder |
| Degree of acetylation AV | [%] | - | 53.9 | 55.4 | 20.1 | 55.4 | 55.2 | 55.8 |
| Degree of acetyl substitution DS | [-] | 0.07 | 2.34 | 2.44 | 0.63 | 2.44 | 2.43 | 2.47 |
| Degree of propyl substitution | [-] | 1.91 | 0.00 | 0.00 | 0.00 | 0.00 | 0.00 | 0.00 |
| Mw | | 75000 | - | - | - | - | - | - |
| 6% Viscosity | [mPa·s] | - | 87 | 75 | 15 | 104 | 98 | 110 |
| Particle size (20 mesh-on) | [wt.%] | 0 | 99 | 98 | 0 | - | 0.6 | 1 |
| Particle size (150 mesh-pass) | [wt.%] | 100 | < 1 | < 1 | 100 | - | 16 | 100 |
| BET specific surface area | [m$^2$/g] | 2.12 | 1.56 | 2.48 | - | - | - | - |
| Total pore volume | [cm$^3$/g] | 0.003 | - | - | - | - | - | - |
| Load displacement amount (10 N) | [mm] | < 1 | 12.0 | 12.0 | - | - | - | - |
| Column property | | | | | | | | |
| Flow rate | [g/min] | N.D. | 0.024 | 0.024 | N.D. | N.D. | 0.024 | N.D. |
| Filler volume | [m$^3$] | 1.57E-06 | 1.57E-06 | 1.57E-06 | 1.57E-06 | 1.57E-06 | 1.57E-06 | 1.57E-06 |
| Average space velocity SV | [h$^{-1}$] | 0.0 | 0.9 | 0.8 | 0.0 | 0.0 | 0.9 | 0 |

[Table 5]

| Table 5: Test liquid | | | | | | |
|---|---|---|---|---|---|---|
| | | Test liquid A | Test liquid B | Test liquid C | Test liquid D | Test liquid E |
| HCl | [mol/l] | 2.0 | 2.0 | 1.3 | 2.0 | 2.0 |
| $HNO_3$ | [mol/l] | 0.0 | 0.7 | 0.7 | 0.0 | 0.0 |
| Au | (ppm) | 19 | 19 | 20 | 50 | 20 |
| Pt | (ppm) | 20 | 20 | 2000 | 1000 | 20 |
| Fe | (ppm) | 22 | 22 | 0 | 1000 | 20 |
| Zn | (ppm) | 29 | 29 | 0 | 1000 | 20 |
| Al | (ppm) | 40 | 40 | 0 | 0 | 0 |
| Cr | (ppm) | 40 | 40 | 0 | 0 | 0 |
| Cu | (ppm) | 40 | 40 | 0 | 0 | 0 |
| Ti | (ppm) | 40 | 40 | 0 | 0 | 0 |
| Pb | (ppm) | 40 | 40 | 0 | 0 | 0 |
| Pd | (ppm) | 40 | 40 | 0 | 0 | 0 |
| Ni | (ppm) | 40 | 40 | 0 | 0 | 0 |
| Sn | (ppm) | 40 | 40 | 0 | 0 | 0 |
| Ir | (ppm) | 40 | 40 | 0 | 0 | 0 |

[Table 6]

| Table 6: Test liquid A | | | | | | | |
|---|---|---|---|---|---|---|---|
| | | Comparative Example 1 | Example 1 | Example 2 | Comparative Example 2 | Example 3 | Example 4 |
| Adsorption test 1-1 | | | | | | | |
| Percentage of Au adsorption | [%] | - | 100 | 100 | - | 100 | 100 |
| Au adsorption amount | [mg] | - | 0.95 | 0.95 | - | 0.95 | 0.95 |
| Percentage of Pt adsorption | [%] | - | 0 | 0 | - | 0 | 0 |
| Percentage of Fe adsorption | [%] | - | 0 | 0 | - | 0 | 0 |
| Percentage of Zn adsorption | [%] | - | 0 | 0 | - | 0 | 0 |
| Percentage of Al adsorption | [%] | - | 0 | 0 | - | 0 | 0 |
| Percentage of Cr adsorption | [%] | - | 0 | 0 | - | 0 | 0 |
| Percentage of Cu adsorption | [%] | - | 0 | 0 | - | 0 | 0 |
| Percentage of Ti adsorption | [%] | - | 0 | 0 | - | 0 | 0 |
| Percentage of Pb adsorption | [%] | - | 0 | 0 | - | 0 | 0 |

(continued)

| Table 6: Test liquid A | | | | | | | |
|---|---|---|---|---|---|---|---|
| | | Comparative Example 1 | Example 1 | Example 2 | Comparative Example 2 | Example 3 | Example 4 |
| Adsorption test 1-1 | | | | | | | |
| Percentage of Pd adsorption | [%] | - | 0 | 0 | - | 0 | 0 |
| Percentage of Ni adsorption | [%] | - | 0 | 0 | - | 0 | 0 |
| Percentage of Sn adsorption | [%] | - | 0 | 0 | - | 0 | 0 |
| Percentage of Ir adsorption | [%] | - | 0 | 0 | - | 0 | 0 |
| Desorption test 1-1 | | | | | | | |
| Percentage of Au desorption | [%] | - | 100 | 100 | - | 100 | 100 |
| Au concentration | (ppm) | - | 475 | 475 | - | 475 | 475 |
| Percentage of Pt adsorption | [%] | - | 0 | 0 | - | 0 | 0 |
| Percentage of Fe adsorption | [%] | - | 0 | 0 | - | 0 | 0 |
| Percentage of Zn adsorption | [%] | - | 0 | 0 | - | 0 | 0 |
| Percentage of Al adsorption | [%] | - | 0 | 0 | - | 0 | 0 |
| Percentage of Cr adsorption | [%] | - | 0 | 0 | - | 0 | 0 |
| Percentage of Cu adsorption | [%] | - | 0 | 0 | - | 0 | 0 |
| Percentage of Ti adsorption | [%] | - | 0 | 0 | - | 0 | 0 |
| Percentage of Pb adsorption | [%] | - | 0 | 0 | - | 0 | 0 |
| Percentage of Pd adsorption | [%] | - | 0 | 0 | - | 0 | 0 |
| Percentage of Ni adsorption | [%] | - | 0 | 0 | - | 0 | 0 |
| Percentage of Sn adsorption | [%] | - | 0 | 0 | - | 0 | 0 |
| Percentage of Ir adsorption | [%] | - | 0 | 0 | - | 0 | 0 |

[Table 7]

| Table 7: Test liquid A | | | | | | | |
|---|---|---|---|---|---|---|---|
| | | Example 5 | Example 6 | Example 7 | Example 8 | Example 9 | Example 10 |
| Adsorption test 1-2 | | | | | | | |
| Percentage of Au adsorption | [%] | 100 | 100 | 100 | 90 | 100 | 95 |
| Au adsorption amount | [mg] | 0.95 | 0.95 | 0.95 | 0.855 | 0.95 | 0.9025 |
| Percentage of Pt adsorption | [%] | 0 | 0 | 0 | 0 | 0 | 0 |
| Percentage of Fe adsorption | [%] | 0 | 0 | 0 | 0 | 0 | 0 |
| Percentage of Zn adsorption | [%] | 0 | 0 | 0 | 0 | 0 | 0 |
| Percentage of Al adsorption | [%] | 0 | 0 | 0 | 0 | 0 | 0 |
| Percentage of Cr adsorption | [%] | 0 | 0 | 0 | 0 | 0 | 0 |
| Percentage of Cu adsorption | [%] | 0 | 0 | 0 | 0 | 0 | 0 |
| Percentage of Ti adsorption | [%] | 0 | 0 | 0 | 0 | 0 | 0 |
| Percentage of Pb adsorption | [%] | 0 | 0 | 0 | 0 | 0 | 0 |
| Percentage of Pd adsorption | [%] | 0 | 0 | 0 | 0 | 0 | 0 |
| Percentage of Ni adsorption | [%] | 0 | 0 | 0 | 0 | 0 | 0 |
| Percentage of Sn adsorption | [%] | 0 | 0 | 0 | 0 | 0 | 0 |
| Percentage of Ir adsorption | [%] | 0 | 0 | 0 | 0 | 0 | 0 |
| Desorption test 1-2 | | | | | | | |
| Percentage of Au desorption | [%] | 100 | 100 | 100 | 100 | 100 | 100 |
| Au concentration | (ppm) | 475 | 475 | 475 | 427.5 | 475 | 427.5 |
| Percentage of Pt adsorption | [%] | 0 | 0 | 0 | 0 | 0 | 0 |
| Percentage of Fe adsorption | [%] | 0 | 0 | 0 | 0 | 0 | 0 |
| Percentage of Zn adsorption | [%] | 0 | 0 | 0 | 0 | 0 | 0 |
| Percentage of Al adsorption | [%] | 0 | 0 | 0 | 0 | 0 | 0 |
| Percentage of Cr adsorption | [%] | 0 | 0 | 0 | 0 | 0 | 0 |

(continued)

| Desorption test 1-2 | | | | | | | |
|---|---|---|---|---|---|---|---|
| Percentage of Cu adsorption | [%] | 0 | 0 | 0 | 0 | 0 | 0 |
| Percentage of Ti adsorption | [%] | 0 | 0 | 0 | 0 | 0 | 0 |
| Percentage of Pb adsorption | [%] | 0 | 0 | 0 | 0 | 0 | 0 |
| Percentage of Pd adsorption | [%] | 0 | 0 | 0 | 0 | 0 | 0 |
| Percentage of Ni adsorption | [%] | 0 | 0 | 0 | 0 | 0 | 0 |
| Percentage of Sn adsorption | [%] | 0 | 0 | 0 | 0 | 0 | 0 |
| Percentage of Ir adsorption | [%] | 0 | 0 | 0 | 0 | 0 | 0 |

[Table 8]

| Table 8: Test liquid A | | | | | | |
|---|---|---|---|---|---|---|
| | | Comparative Example 3 | Comparative Example 4 | Comparative Example 5 | Comparative Example 6 | Comparative Example 7 |
| Adsorption test 1-3 | | | | | | |
| Percentage of Au adsorption | [%] | 15 | 5 | 1 | 26 | - |
| Au adsorption amount | [mg] | 0.14 | 0.05 | 0.01 | 0.25 | - |
| Percentage of Pt adsorption | [%] | 0 | 0 | 0 | 0 | - |
| Percentage of Fe adsorption | [%] | 0 | 0 | 0 | 0 | - |
| Percentage of Zn adsorption | [%] | 0 | 0 | 0 | 0 | - |
| Percentage of Al adsorption | [%] | 0 | 0 | 0 | 0 | - |
| Percentage of Cr adsorption | [%] | 0 | 0 | 0 | 0 | - |
| Percentage of Cu adsorption | [%] | 0 | 0 | 0 | 0 | - |
| Percentage of Ti adsorption | [%] | 0 | 0 | 0 | 0 | - |
| Percentage of Pb adsorption | [%] | 0 | 0 | 0 | 0 | - |
| Percentage of Pd adsorption | [%] | 0 | 0 | 0 | 0 | - |
| Percentage of Ni adsorption | [%] | 0 | 0 | 0 | 0 | - |

(continued)

| Table 8: Test liquid A | | | | | | |
|---|---|---|---|---|---|---|
| | | Comparative Example 3 | Comparative Example 4 | Comparative Example 5 | Comparative Example 6 | Comparative Example 7 |
| Adsorption test 1-3 | | | | | | |
| Percentage of Sn adsorption | [%] | 0 | 0 | 0 | 0 | - |
| Percentage of Ir adsorption | [%] | 0 | 0 | 0 | 0 | - |
| Desorption test 1-3 | | | | | | |
| Percentage of Au desorption | [%] | 100 | 100 | 100 | 100 | - |
| Au concentration | (ppm) | 71 | 24 | 5 | 124 | - |
| Percentage of Pt adsorption | [%] | 0 | 0 | 0 | 0 | - |
| Percentage of Fe adsorption | [%] | 0 | 0 | 0 | 0 | - |
| Percentage of Zn adsorption | [%] | 0 | 0 | 0 | 0 | - |
| Percentage of Al adsorption | [%] | 0 | 0 | 0 | 0 | - |
| Percentage of Cr adsorption | [%] | 0 | 0 | 0 | 0 | - |
| Percentage of Cu adsorption | [%] | 0 | 0 | 0 | 0 | - |
| Percentage of Ti adsorption | [%] | 0 | 0 | 0 | 0 | - |
| Percentage of Pb adsorption | [%] | 0 | 0 | 0 | 0 | - |
| Percentage of Pd adsorption | [%] | 0 | 0 | 0 | 0 | - |
| Percentage of Ni adsorption | [%] | 0 | 0 | 0 | 0 | - |
| Percentage of Sn adsorption | [%] | 0 | 0 | 0 | 0 | - |
| Percentage of Ir adsorption | [%] | 0 | 0 | 0 | 0 | - |

[Table 9]

| Table 9: Test liquid B | | | | | | | |
|---|---|---|---|---|---|---|---|
| | | Comparative Example 1 | Example 1 | Example 2 | Comparative Example 2 | Example 3 | Example 4 |
| Adsorption test 2-1 | | | | | | | |
| Percentage of Au adsorption | [%] | - | 100 | 100 | - | 100 | 100 |

(continued)

| Table 9: Test liquid B | | | | | | | |
|---|---|---|---|---|---|---|---|
| | | Comparative Example 1 | Example 1 | Example 2 | Comparative Example 2 | Example 3 | Example 4 |
| Adsorption test 2-1 | | | | | | | |
| Au adsorption amount | [mg] | - | 0.95 | 0.95 | - | 0.95 | 0.95 |
| Percentage of Pt adsorption | [%] | - | 0 | 0 | - | 0 | 0 |
| Percentage of Fe adsorption | [%] | - | 0 | 0 | - | 0 | 0 |
| Percentage of Zn adsorption | [%] | - | 0 | 0 | - | 0 | 0 |
| Percentage of Al adsorption | [%] | - | 0 | 0 | - | 0 | 0 |
| Percentage of Cr adsorption | [%] | - | 0 | 0 | - | 0 | 0 |
| Percentage of Cu adsorption | [%] | - | 0 | 0 | - | 0 | 0 |
| Percentage of Ti adsorption | [%] | - | 0 | 0 | - | 0 | 0 |
| Percentage of Pb adsorption | [%] | - | 0 | 0 | - | 0 | 0 |
| Percentage of Pd adsorption | [%] | - | 0 | 0 | - | 0 | 0 |
| Percentage of Ni adsorption | [%] | - | 0 | 0 | - | 0 | 0 |
| Percentage of Sn adsorption | [%] | - | 0 | 0 | - | 0 | 0 |
| Percentage of Ir adsorption | [%] | - | 0 | 0 | - | 0 | 0 |
| Desorption test 2-1 | | | | | | | |
| Percentage of Au desorption | [%] | - | 100 | 100 | - | 100 | 100 |
| Au concentration | (ppm) | - | 475 | 475 | - | 475 | 475 |
| Percentage of Pt adsorption | [%] | - | 0 | 0 | - | 0 | 0 |
| Percentage of Fe adsorption | [%] | - | 0 | 0 | - | 0 | 0 |
| Percentage of Zn adsorption | [%] | - | 0 | 0 | - | 0 | 0 |
| Percentage of Al adsorption | [%] | - | 0 | 0 | - | 0 | 0 |
| Percentage of Cr adsorption | [%] | - | 0 | 0 | - | 0 | 0 |
| Percentage of Cu adsorption | [%] | - | 0 | 0 | - | 0 | 0 |

(continued)

| Desorption test 2-1 | | | | | | | |
|---|---|---|---|---|---|---|---|
| Percentage of Ti adsorption | [%] | - | 0 | 0 | - | 0 | 0 |
| Percentage of Pb adsorption | [%] | - | 0 | 0 | - | 0 | 0 |
| Percentage of Pd adsorption | [%] | - | 0 | 0 | - | 0 | 0 |
| Percentage of Ni adsorption | [%] | - | 0 | 0 | - | 0 | 0 |
| Percentage of Sn adsorption | [%] | - | 0 | 0 | - | 0 | 0 |
| Percentage of Ir adsorption | [%] | - | 0 | 0 | - | 0 | 0 |

[Table 10]

| Table 10: Test liquid B | | | | | | | |
|---|---|---|---|---|---|---|---|
| | | Example 5 | Example 6 | Example 7 | Example 8 | Example 9 | Example 10 |
| Adsorption test 2-2 | | | | | | | |
| Percentage of Au adsorption | [%] | 100 | 100 | 100 | 80 | 100 | 90 |
| Au adsorption amount | [mg] | 0.95 | 0.95 | 0.95 | 0.76 | 0.95 | 0.855 |
| Percentage of Pt adsorption | [%] | 0 | 0 | 0 | 0 | 0 | 0 |
| Percentage of Fe adsorption | [%] | 0 | 0 | 0 | 0 | 0 | 0 |
| Percentage of Zn adsorption | [%] | 0 | 0 | 0 | 0 | 0 | 0 |
| Percentage of Al adsorption | [%] | 0 | 0 | 0 | 0 | 0 | 0 |
| Percentage of Cr adsorption | [%] | 0 | 0 | 0 | 0 | 0 | 0 |
| Percentage of Cu adsorption | [%] | 0 | 0 | 0 | 0 | 0 | 0 |
| Percentage of Ti adsorption | [%] | 0 | 0 | 0 | 0 | 0 | 0 |
| Percentage of Pb adsorption | [%] | 0 | 0 | 0 | 0 | 0 | 0 |
| Percentage of Pd adsorption | [%] | 0 | 0 | 0 | 0 | 0 | 0 |
| Percentage of Ni adsorption | [%] | 0 | 0 | 0 | 0 | 0 | 0 |
| Percentage of Sn adsorption | [%] | 0 | 0 | 0 | 0 | 0 | 0 |

(continued)

| Table 10: Test liquid B | | Example 5 | Example 6 | Example 7 | Example 8 | Example 9 | Example 10 |
|---|---|---|---|---|---|---|---|
| Adsorption test 2-2 | | | | | | | |
| Percentage of Ir adsorption | [%] | 0 | 0 | 0 | 0 | 0 | 0 |
| Desorption test 2-2 | | | | | | | |
| Percentage of Au desorption | [%] | 100 | 100 | 100 | 100 | 100 | 100 |
| Au concentration | (ppm) | 475 | 475 | 475 | 380 | 475 | 427.5 |
| Percentage of Pt adsorption | [%] | 0 | 0 | 0 | 0 | 0 | 0 |
| Percentage of Fe adsorption | [%] | 0 | 0 | 0 | 0 | 0 | 0 |
| Percentage of Zn adsorption | [%] | 0 | 0 | 0 | 0 | 0 | 0 |
| Percentage of Al adsorption | [%] | 0 | 0 | 0 | 0 | 0 | 0 |
| Percentage of Cr adsorption | [%] | 0 | 0 | 0 | 0 | 0 | 0 |
| Percentage of Cu adsorption | [%] | 0 | 0 | 0 | 0 | 0 | 0 |
| Percentage of Ti adsorption | [%] | 0 | 0 | 0 | 0 | 0 | 0 |
| Percentage of Pb adsorption | [%] | 0 | 0 | 0 | 0 | 0 | 0 |
| Percentage of Pd adsorption | [%] | 0 | 0 | 0 | 0 | 0 | 0 |
| Percentage of Ni adsorption | [%] | 0 | 0 | 0 | 0 | 0 | 0 |
| Percentage of Sn adsorption | [%] | 0 | 0 | 0 | 0 | 0 | 0 |
| Percentage of Ir adsorption | [%] | 0 | 0 | 0 | 0 | 0 | 0 |

[Table 11]

| Table 11: Test liquid B | | Comparative Example 3 | Comparative Example 4 | Comparative Example 5 | Comparative Example 6 | Comparative Example 7 |
|---|---|---|---|---|---|---|
| Adsorption test 2-3 | | | | | | |
| Percentage of Au adsorption | [%] | 15 | 5 | 1 | 26 | - |
| Au adsorption amount | [mg] | 0.14 | 0.05 | 0.0095 | 0.25 | - |

(continued)

| Table 11: Test liquid B | | Comparative Example 3 | Comparative Example 4 | Comparative Example 5 | Comparative Example 6 | Comparative Example 7 |
|---|---|---|---|---|---|---|
| Percentage of Pt adsorption | [%] | 0 | 0 | 0 | 0 | - |
| Percentage of Fe adsorption | [%] | 0 | 0 | 0 | 0 | - |
| Percentage of Zn adsorption | [%] | 0 | 0 | 0 | 0 | - |
| Percentage of Al adsorption | [%] | 0 | 0 | 0 | 0 | - |
| Percentage of Cr adsorption | [%] | 0 | 0 | 0 | 0 | - |
| Percentage of Cu adsorption | [%] | 0 | 0 | 0 | 0 | - |
| Percentage of Ti adsorption | [%] | 0 | 0 | 0 | 0 | - |
| Percentage of Pb adsorption | [%] | 0 | 0 | 0 | 0 | - |
| Percentage of Pd adsorption | [%] | 0 | 0 | 0 | 0 | - |
| Percentage of Ni adsorption | [%] | 0 | 0 | 0 | 0 | - |
| Percentage of Sn adsorption | [%] | 0 | 0 | 0 | 0 | - |
| Percentage of Ir adsorption | [%] | 0 | 0 | 0 | 0 | - |
| Desorption test 2-3 | | | | | | |
| Percentage of Au desorption | [%] | 100 | 100 | 100 | 100 | - |
| Au concentration | (ppm) | 71 | 24 | 5 | 124 | - |
| Percentage of Pt adsorption | [%] | 0 | 0 | 0 | 0 | - |
| Percentage of Fe adsorption | [%] | 0 | 0 | 0 | 0 | - |
| Percentage of Zn adsorption | [%] | 0 | 0 | 0 | 0 | - |
| Percentage of Al adsorption | [%] | 0 | 0 | 0 | 0 | - |
| Percentage of Cr adsorption | [%] | 0 | 0 | 0 | 0 | - |
| Percentage of Cu adsorption | [%] | 0 | 0 | 0 | 0 | - |
| Percentage of Ti adsorption | [%] | 0 | 0 | 0 | 0 | - |

(continued)

| Table 11: Test liquid B | | Comparative Example 3 | Comparative Example 4 | Comparative Example 5 | Comparative Example 6 | Comparative Example 7 |
|---|---|---|---|---|---|---|
| Percentage of Pb adsorption | [%] | 0 | 0 | 0 | 0 | - |
| Percentage of Pd adsorption | [%] | 0 | 0 | 0 | 0 | - |
| Percentage of Ni adsorption | [%] | 0 | 0 | 0 | 0 | - |
| Percentage of Sn adsorption | [%] | 0 | 0 | 0 | 0 | - |
| Percentage of Ir adsorption | [%] | 0 | 0 | 0 | 0 | - |

[Table 12]

| TABLE 12: Test liquid C | | Comparative Example 1 | Example 1 | Example 2 | Comparative Example 2 | Example 3 | Example 4 |
|---|---|---|---|---|---|---|---|
| Adsorption test 3-1 | | | | | | | |
| Percentage of Au adsorption | [%] | - | 100 | 100 | - | 100 | 100 |
| Percentage of Pt adsorption | [%] | - | 0 | 0 | - | 0 | 0 |

[Table 13]

| TABLE 13: Test liquid C | | Example 5 | Example 6 | Example 7 | Example 8 | Example 9 | Example 10 |
|---|---|---|---|---|---|---|---|
| Adsorption test 3-2 | | | | | | | |
| Percentage of Au adsorption | [%] | 100 | 100 | 100 | 90 | 100 | 95 |
| Percentage of Pt adsorption | [%] | 0 | 0 | 0 | 0 | 0 | 0 |

[Table 14]

| TABLE 14: Test liquid C | | Comparative Example 3 | Comparative Example 4 | Comparative Example 5 | Comparative Example 6 | Comparative Example 7 |
|---|---|---|---|---|---|---|
| Adsorption test 3-3 | | | | | | |
| Percentage of Au adsorption | [%] | 15 | 5 | 1 | 26 | - |
| Percentage of Pt adsorption | [%] | 0 | 0 | 0 | 0 | - |

[Table 15]

| Table 15: Test liquid D | | | | Example 1 |
|---|---|---|---|---|
| Liquid passage time | Adsorption test 4-1 | | | |
| 0-1h | Percentage of Au adsorption | [%] | 25 |
| | Percentage of Pt adsorption | [%] | 14 |
| | Percentage of Fe adsorption | [%] | 0 |
| | Percentage of Zn adsorption | [%] | 22 |
| 1-2h | Percentage of Au adsorption | [%] | 23 |
| | Percentage of Pt adsorption | [%] | 3 |
| | Percentage of Fe adsorption | [%] | 0 |
| | Percentage of Zn adsorption | [%] | 4 |
| 2-3h | Percentage of Au adsorption | [%] | 23 |
| | Percentage of Pt adsorption | [%] | 14 |
| | Percentage of Fe adsorption | [%] | 0 |
| | Percentage of Zn adsorption | [%] | 0 |

[Table 16]

| Table 16: Test liquid E | | | | | |
|---|---|---|---|---|---|
| Adsorption test 5-1 | | | Example 1 | Example 1 | Example 1 |
| Liquid passage time | Space velocity during liquid passage | [1/h] | 5.0 | 10.0 | 20.0 |
| 0 - 0.5 h | Percentage of Au adsorption | [%] | 100 | 100 | 90 |
| | Percentage of Pt adsorption | [%] | 0 | 0 | 0 |
| | Percentage of Fe adsorption | [%] | 0 | 0 | 0 |
| | Percentage of Zn adsorption | [%] | 0 | 0 | 0 |

In Tables 1 and 2, based on comparison among Examples 5 to 7 in which only the particle size distribution was changed by sieving, when the particle diameter is small (the content of the particle size (20 mesh-on) is low), the BET specific surface area is large, resulting in the tendency of a low average space velocity SV (small SV value). Example 10 obtained by using the same cellulose acetate as in Examples 5 to 7 as the raw material had a larger BET specific surface area than those of Examples 5 to 7, but had a larger average space velocity SV. It is considered that Example 10 had a large BET specific surface area due to its large total pore volume, but had a large particle diameter (a high content of the particle size (20 mesh-on)) and a high load displacement amount (a high hardness), and thus had increased inter-particle voids, and, as a result, a large average space velocity SV was obtained.

Based on comparison between Example 5 and Example 8, Example 8 subjected to the pulverization treatment had a small particle size (a low content of the particle diameter (20 mesh-on) and a high content of the particle size (150 mesh-pass)) and a large BET specific surface area, but had a large average space velocity SV. This is considered to be because the hydrophobic portion (skeleton) of the cellulose was exposed on the surfaces of the particles by pulverization.

Based on comparison between Example 1 and Example 6, these Examples were identical in particle size distribution (particle size (20 mesh-on) and particle size (150 mesh-pass)) and similar in BET specific surface area, but were significantly different in average space velocity SV. It is considered that the cellulose acetate flakes of Example 6 were obtained under precipitation conditions different from those of Example 1, and thus that more hydrophilic functional groups were exposed on the particle surface than in Example 1, resulting in a decrease in average space velocity SV.

As shown in Table 4, no desired average space velocity SV was obtained in Comparative Examples 8 to 14. The reason for this is considered to be that, in Comparative Example 8, the cellulose acetate propionate was in the form of a powder, resulting in a reduction in inter-particle space when it was packed in the column. In Comparative Examples 9 and 10, the precipitant was kneaded into the reaction mixture containing cellulose acetate at a high temperature of 60°C, which is a technical standard, using a biaxial kneader, and thus very soft cellulose acetate flakes were formed. As a result, the flakes were broken and the inter-particle space was reduced. Therefore, the cellulose acetate flakes of the present disclosure were not obtained. It is considered that in Comparative Examples 12 and 14 in which a biaxial kneader was similarly used, a powdery product was obtained and no desired flake-shaped product was obtained. Comparative Example 11 is cellulose acetate having a low degree of substitution, which could not be precipitated in the form of flakes at all.

It is considered that, in Comparative Example 13, since the cellulose acetate was separated by adding the aqueous dilute acetic acid solution (precipitant) to the reaction product containing the cellulose acetate under vigorous stirring, the precipitation rate was high and the spatial spread of the dope (reaction product) droplets in the precipitant could not be increased, and thus that no desired average space velocity SV was obtained.

As shown in Tables 1 to 4 and 6 to 16, the cellulose acetate flakes of Examples are superior in ease of liquid passage to Comparative Examples. In addition, it was confirmed that gold could be selectively and efficiently recovered from a solution containing a plurality of metals by a column in which the cellulose acetate flakes of Examples were as the filler. In addition, a gold-containing solution having a concentration higher than that of the original (untreated) gold-containing solution could be obtained by desorption with water. From these evaluation results, the superiority of the present disclosure is clear.

Disclosed Aspects

Each of the following aspects discloses a preferred embodiment.

Aspect 1

A cellulose acetate flake having a degree of acetyl substitution of 0.80 or more and 2.90 or less and an average space velocity SV, as determined by the following method, of more than $1.0\ h^{-1}$ and $120\ h^{-1}$ or less,

the average space velocity SV being determined by: placing, in a vertical direction, a column (internal diameter: 10 mm) in which the cellulose acetate flake is packed up to a height of 2.0 cm from a bottom surface of the column; charging a hydrochloric acid solution having a concentration of 2.0 mol/l (temperature: $20°C \pm 5°C$) from an upper side of the column; allowing the hydrochloric acid solution to flow down in the column under atmospheric pressure; and dividing an amount $(m^3/h)$ of liquid flowing out from a lower side of the column per unit time by a volume $(m^3)$ of space occupied by the cellulose acetate flake in the column.

Aspect 2

The cellulose acetate flake according to Aspect 1, which has a BET specific surface area of $1.8\ m^2/g$ or more and $25\ m^2/g$ or less.

Aspect 3

The cellulose acetate flake according to Aspect 1 or 2, which has a total pore volume of $0.005\ cm^3/g$ or more and $150\ cm^3/g$ or less.

Aspect 4

The cellulose acetate flake according to any one of Aspects 1 to 3, wherein a proportion of particles having a particle diameter of 850 $\mu$m or more is 50% or more in a particle size distribution as determined using a JIS test sieve.

Aspect 5

The cellulose acetate flake according to any one of Aspects 1 to 4, wherein a load displacement amount as measured by the following method is 10 mm or less,

the load displacement amount being determined by: packing a cylindrical syringe having a 10-ml volume (made of polypropylene and having an internal diameter of 17 mm) with the cellulose acetate flake to form a packed bed having a height of 50 mm; compressing the packed bed at a compression rate of 10 mm/min using a universal tensile tester (trade name "RTG1310" available from A&D Company, Limited); measuring a height of the packed bed under a load of 10 N; and calculating a difference from a height of the packed bed before the compression.

Aspect 6

The cellulose acetate flake according to any one of Aspects 1 to 5, which is a filler for a gold adsorption column.

Aspect 7

A gold adsorption column packed with the cellulose acetate flake described in any one of Aspects 1 to 6 as a filler.

Aspect 8

The gold adsorption column according to Aspect 7, wherein a packing fraction of the cellulose acetate flake is 10% or more.

Aspect 9

A method for recovering gold, the method including passing a liquid containing gold ions through the gold adsorption column described in Aspect 7 or 8 to adsorb the gold ions in the liquid onto the cellulose acetate flake.

Aspect 10

A method for recovering gold, the method including:

packing the cellulose acetate flake described in any one of Aspects 1 to 6 into a cylindrical vessel to form a packed column; and
passing a liquid containing gold ions through the packed column to adsorb the gold ions onto the cellulose acetate flake.

Aspect 11

The method for recovering gold according to Aspect 10, wherein the liquid containing gold ions is passed through the packed column at a flow rate at which a space velocity SV' of more than 1.0 $h^{-1}$ is achieved.

Aspect 12

The method for recovering gold according to Aspect 10 or 11, further including dissolving or incinerating the cellulose acetate flake having the gold ions adsorbed thereonto.

Aspect 13

The method for recovering gold according to any one of Aspects 10 to 12, further including preparing the liquid containing gold ions by dissolving or extracting gold from a gold-containing material in aqua regia.

Aspect 14

A method for concentrating a gold solution, the method including:

packing the cellulose acetate flake described in any one of Aspects 1 to 6 into a cylindrical vessel to form a packed column;
passing a liquid containing gold ions as an original liquid through the packed column to adsorb the gold ions onto the cellulose acetate flake; and
passing a desorption liquid through the packed column containing the cellulose acetate flake having the gold ions adsorbed thereonto to obtain a liquid containing gold ions at a concentration higher than that of the original liquid.

Aspect 15

A method for producing the cellulose acetate flake described in any one of Aspects 1 to 6,

the method including mixing a dope containing cellulose acetate having a degree of acetyl substitution of 0.80 or more and 2.90 or less with a precipitant, and
the dope and the precipitant during the mixing having a temperature of 40°C or lower.

Aspect 16

Use of the cellulose acetate flake described in any one of Aspects 1 to 6 in production of a packed column,

the use of the cellulose acetate flake being use in production of a packed column packed with the cellulose acetate flake, and
gold ions being adsorbed onto the cellulose acetate flake by passing a liquid containing gold ions as an original liquid through the packed column.

Aspect 17

Use of the cellulose acetate flake described in any one of Aspects 1 to 6 in production of a packed column,

the use of the cellulose acetate flake being use in production of a packed column packed with the cellulose acetate flake, and
gold ions being selectively adsorbed onto the cellulose acetate flake by passing a liquid containing a plurality of metal ions as an original liquid through the packed column.

Aspect 18

The use of the cellulose acetate flake in production of a packed column according to Aspect 16 or 17, wherein a desorption liquid is passed through the packed column containing the cellulose acetate flake having the gold ions adsorbed thereonto to obtain a desorption liquid containing gold ions at a concentration higher than that of the original liquid.

Aspect 19

The cellulose acetate flake according to any one of Aspects 1 to 6, wherein the average space velocity SV is 2.0 $h^{-1}$ or more and 110 $h^{-1}$ or less.

Aspect 20

The cellulose acetate flake according to any one of Aspects 1 to 6 and Aspect 19, wherein the average space velocity SV is 10.0 $h^{-1}$ or more and 110 $h^{-1}$ or less.

Aspect 21

The cellulose acetate flake according to any one of Aspects 1 to 6 and Aspects 19 to 20, wherein the average space velocity SV is 50.0 $h^{-1}$ or more and 110 $h^{-1}$ or less.

Aspect 22

The cellulose acetate flake according to any one of Aspects 1 to 6 and Aspects 19 to 21, wherein the average space velocity SV is 80.0 $h^{-1}$ or more and 108 $h^{-1}$ or less.

Aspect 23

The cellulose acetate flake according to any one of Aspects 1 to 6 and Aspects 19 to 22, wherein the average space velocity SV is 85.0 $h^{-1}$ or more and 108 $h^{-1}$ or less.

Aspect 24

The cellulose acetate flake according to any one of Aspects 1 to 6 and Aspects 19 to 23, wherein the average space velocity SV is 85.0 $h^{-1}$ or more and 92.0 $h^{-1}$ or less.

Aspect 25

The cellulose acetate flake according to any one of Aspects 1 to 6 and Aspects 19 to 24, which has a BET specific surface area of 7 $m^2$/g or more and 18 $m^2$/g or less.

Aspect Item 26

The cellulose acetate flake according to any one of Aspects 1 to 6 and Aspects 19 to 25, which has a total pore volume of 0.009 $cm^3$/g or more and 1.0 $cm^3$/g or less.

Aspect 27

The cellulose acetate flake according to any one of Aspects 1 to 6 and Aspects 19 to 26, which has an Mw of 170000 or more and 250000 or less.

Aspect 28

The cellulose acetate flake according to any one of Aspects 1 to 6 and Aspects 19 to 27, wherein the cellulose acetate constituting the cellulose acetate flake has a 6% viscosity of 70 mPa·s or more and 150 mPa·s or less.

Aspect 29

The cellulose acetate flake according to any one of Aspects 1 to 6 and Aspects 19 to 28, which has a degree of acetyl substitution DS of 1.10 or more and 2.60 or less.

Aspect 30

The cellulose acetate flake according to any one of Aspects 1 to 6 and Aspects 19 to 29, which has a width of 0.1 mm or more and 1 mm or less and a thickness of 0.05 mm or more and 0.1 mm or less.

Aspect 31

The cellulose acetate flake according to any one of Aspects 1 to 6 and Aspects 19 to 30, wherein the cellulose acetate flake has a shape in which the width is longer than the thickness.

Aspect 32

The cellulose acetate flake according to any one of Aspects 1 to 6 and Aspects 19 to 31, wherein a proportion of particles having a particle diameter of 850 $\mu$m or more is 10% or more and 100% or less in a particle size distribution of the cellulose acetate flake.

Aspect 33

The cellulose acetate flake according to any one of Aspects 1 to 6 and Aspects 19 to 32, wherein a load displacement amount as measured by the following method is 0 mm or more and 6 mm or less,
the load displacement amount being determined by: packing a cylindrical syringe having a 10-ml volume (made of polypropylene and having an internal diameter of 17 mm) with the cellulose acetate flake to form a packed bed having a height of 50 mm; compressing the packed bed at a compression rate of 10 mm/min using a universal tensile tester (trade name "RTG1310" available from A&D Company, Limited); measuring a height of the packed bed under a load of 10 N; and calculating a difference from a height of the packed bed before the compression.

Aspect 34

A cellulose acetate flake having:

a width of 0.1 mm or more and 1 mm or less and a thickness of 0.05 mm or more and 0.1 mm or less,
a shape in which the width is longer than the thickness,
a proportion of particles having a particle diameter of 850 $\mu$m or more of 10% or more and 100% or less in a particle size distribution of the cellulose acetate flake,
a BET specific surface area of 7 m$^2$/g or more and 18 m$^2$/g or less,
a total pore volume of 0.009 cm$^3$/g or more and 1.0 cm$^3$/g or less,
an Mw of 170000 or more and 250000 or less, and
a degree of acetyl substitution DS of 1.10 or more and 2.60 or less.

**Claims**

1. A cellulose acetate flake having a degree of acetyl substitution of 0.80 or more and 2.90 or less and an average space velocity SV, as determined by the following method, of more than 1.0 h$^{-1}$ and 120 h$^{-1}$ or less, the average space velocity SV being determined by: placing, in a vertical direction, a column (internal diameter: 10 mm) in which the cellulose acetate flake is packed up to a height of 2.0 cm from a bottom surface of the column; charging a hydrochloric acid solution having a concentration of 2.0 mol/l (temperature: 20°C $\pm$ 5°C) from an upper side of the column; allowing the hydrochloric acid solution to flow down in the column under atmospheric pressure; and dividing an amount (m$^3$/h) of liquid flowing out from a lower side of the column per unit time by a volume (m$^3$) of space occupied by the cellulose acetate flake in the column.

2. The cellulose acetate flake according to claim 1, which has a BET specific surface area of 1.8 m$^2$/g or more and 25 m$^2$/g or less.

3. The cellulose acetate flake according to claim 1 or 2, which has a total pore volume of 0.005 cm$^3$/g or more and 150 cm$^3$/g or less.

4. The cellulose acetate flake according to any one of claims 1 to 3, wherein a proportion of particles having a particle diameter of 850 $\mu$m or more is 50% or more in a particle size distribution as determined using a JIS test sieve.

5. The cellulose acetate flake according to any one of claims 1 to 4, wherein a load displacement amount as measured by the following method is 10 mm or less,
the load displacement amount being determined by: packing a cylindrical syringe having a 10-ml volume (made of polypropylene and having an internal diameter of 17 mm) with the cellulose acetate flake to form a packed bed having a height of 50 mm; compressing the packed bed at a compression rate of 10 mm/min using a universal tensile tester (trade name "RTG1310" available from A&D Company, Limited); measuring a height of the packed bed under a load of 10 N; and calculating a difference from a height of the packed bed before the compression.

6. The cellulose acetate flake according to any one of claims 1 to 5, which is a filler for a gold adsorption column.

7. A gold adsorption column packed with the cellulose acetate flake described in any one of claims 1 to 6 as a filler.

8. The gold adsorption column according to claim 7, wherein a packing fraction of the cellulose acetate flake is 10% or more.

9. A method for recovering gold, the method comprising passing a liquid containing gold ions through the gold adsorption column described in claim 7 or 8 to adsorb the gold ions in the liquid onto the cellulose acetate flake.

10. A method for recovering gold, the method comprising:

    packing the cellulose acetate flake described in any one of claims 1 to 6 into a cylindrical vessel to form a packed column; and
    passing a liquid containing gold ions through the packed column to adsorb the gold ions onto the cellulose acetate flake.

11. The method for recovering gold according to claim 10, wherein the liquid containing gold ions is passed through the packed column at a flow rate at which a space velocity SV' of more than 1.0 h$^{-1}$ is achieved.

12. The method for recovering gold according to claim 10 or 11, further comprising dissolving or incinerating the cellulose acetate flake having the gold ions adsorbed thereonto.

13. The method for recovering gold according to any one of claims 10 to 12, further comprising preparing the liquid containing gold ions by dissolving or extracting gold from a gold-containing material in aqua regia.

14. A method for concentrating a gold solution, the method comprising:

packing the cellulose acetate flake described in any one of claims 1 to 6 into a cylindrical vessel to form a packed column;
passing a liquid containing gold ions as an original liquid through the packed column to adsorb the gold ions onto the cellulose acetate flake; and
passing a desorption liquid through the packed column containing the cellulose acetate flake having the gold ions adsorbed thereonto to obtain a liquid containing gold ions at a concentration higher than that of the original liquid.

# INTERNATIONAL SEARCH REPORT

| | International application No. |
|---|---|
| | **PCT/JP2023/039200** |

## A. CLASSIFICATION OF SUBJECT MATTER

*C08B 3/06*(2006.01)i; *B01J 20/24*(2006.01)i; *C22B 3/24*(2006.01)i; *C22B 11/00*(2006.01)i
FI:　C08B3/06; B01J20/24; C22B3/24; C22B11/00

According to International Patent Classification (IPC) or to both national classification and IPC

## B. FIELDS SEARCHED

Minimum documentation searched (classification system followed by classification symbols)

　　C08B3/06; B01J20/24; C22B3/24; C22B11/00

Documentation searched other than minimum documentation to the extent that such documents are included in the fields searched

　　Published examined utility model applications of Japan 1922-1996
　　Published unexamined utility model applications of Japan 1971-2024
　　Registered utility model specifications of Japan 1996-2024
　　Published registered utility model applications of Japan 1994-2024

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X | WO 2014/142166 A1 (DAICEL CORP.) 18 September 2014 (2014-09-18) claims, examples 5-7, 10, 13 | 1-6 |
| Y | | 7-14 |
| X | WO 2018/139319 A1 (DAICEL CORP.) 02 August 2018 (2018-08-02) claims, examples 2-7, comparative examples 1-2, table 1 | 1-6 |
| Y | | 7-14 |
| X | JP 2018-119051 A (DAICEL CORP.) 02 August 2018 (2018-08-02) claims, examples 1-3, comparative examples 2-4 | 1-6 |
| Y | | 7-14 |
| X | JP 2021-161320 A (DAICEL CORP.) 11 October 2021 (2021-10-11) claims, examples 2-3, comparative examples 1-3 | 1-6 |
| Y | | 7-14 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 January 2024** | **16 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

# EP 4 613 782 A1

## INTERNATIONAL SEARCH REPORT

International application No.

**PCT/JP2023/039200**

### C. DOCUMENTS CONSIDERED TO BE RELEVANT

| Category* | Citation of document, with indication, where appropriate, of the relevant passages | Relevant to claim No. |
|---|---|---|
| X | JP 2018-119052 A (DAICEL CORP.) 02 August 2018 (2018-08-02) claims, comparative examples 1-2, examples 1-7 | 1-6 |
| Y | | 7-14 |
| X | JP 6-157601 A (DAICEL CHEM. IND., LTD.) 07 June 1994 (1994-06-07) claims, examples 11-20, comparative example 2 | 1-6 |
| Y | | 7-14 |
| X | JP 2000-212201 A (DAICEL CHEM. IND., LTD.) 02 August 2000 (2000-08-02) claims, examples | 1-6 |
| Y | | 7-14 |
| X | JP 2000-212202 A (DAICEL CHEM. IND., LTD.) 02 August 2000 (2000-08-02) claims, examples | 1-6 |
| Y | | 7-14 |
| Y | JP 2014-109064 A (DAICEL CORP.) 12 June 2014 (2014-06-12) claims, examples | 7-14 |
| Y | JP 63-100140 A (ELECTROPLATING ENG. OF JAPAN CO.) 02 May 1988 (1988-05-02) claims, examples, figures | 7-14 |
| Y | JP 64-8227 A (ELECTROPLATING ENG. OF JAPAN CO.) 12 January 1989 (1989-01-12) claims, examples, page 4, lower left column, figures | 7-14 |
| Y | JP 2016-40032 A (KURARAY CO., LTD.) 24 March 2016 (2016-03-24) claims, examples, figures | 7-14 |
| Y | WO 2021/245832 A1 (NATIONAL UNIVERSITY CORPORATION KANAZAWA UNIV.) 09 December 2021 (2021-12-09) claims, examples, paragraph [0067] | 7-14 |

Form PCT/ISA/210 (second sheet) (July 2022)

41

## INTERNATIONAL SEARCH REPORT
### Information on patent family members

| International application No. |
|---|
| **PCT/JP2023/039200** |

| Patent document cited in search report | | | Publication date (day/month/year) | Patent family member(s) | | | Publication date (day/month/year) |
|---|---|---|---|---|---|---|---|
| WO | 2014/142166 | A1 | 18 September 2014 | US | 2016/0032020 | A1 | |
| | | | | claims, examples 5-7, 10, 13 | | | |
| | | | | US | 2016/0317568 | A1 | |
| | | | | US | 2019/0151349 | A1 | |
| | | | | US | 2017/0100426 | A1 | |
| | | | | WO | 2015/093067 | A1 | |
| | | | | WO | 2015/146853 | A1 | |
| | | | | EP | 2975063 | A1 | |
| | | | | EP | 3090749 | A1 | |
| | | | | EP | 3130236 | A1 | |
| | | | | CN | 105073782 | A | |
| | | | | KR | 10-2016-0098296 | A | |
| | | | | CN | 105848500 | A | |
| | | | | CN | 106163300 | A | |
| | | | | CN | 110548043 | A | |
| WO | 2018/139319 | A1 | 02 August 2018 | US | 2019/0389977 | A1 | |
| | | | | claims, examples 2-7, comparative examples 1-2, table 1 | | | |
| | | | | EP | 3575329 | A1 | |
| | | | | CN | 110248965 | A | |
| JP | 2018-119051 | A | 02 August 2018 | US | 2021/0277206 | A1 | |
| | | | | claims, examples 1-3, comparative examples 2-4 | | | |
| | | | | WO | 2018/139317 | A1 | |
| | | | | EP | 3575327 | A1 | |
| | | | | CN | 110291112 | A | |
| JP | 2021-161320 | A | 11 October 2021 | (Family: none) | | | |
| JP | 2018-119052 | A | 02 August 2018 | US | 2019/0389977 | A1 | |
| | | | | claims, comparative examples 1-2, examples 1-7 | | | |
| | | | | WO | 2018/139319 | A1 | |
| | | | | EP | 3575329 | A1 | |
| | | | | CN | 110248965 | A1 | |
| JP | 6-157601 | A | 07 June 1994 | US | 5977346 | A | |
| | | | | claims, examples 11-20, comparative example 2 | | | |
| | | | | EP | 590401 | A3 | |
| | | | | CN | 1087645 | A | |
| | | | | CN | 1148599 | A | |
| JP | 2000-212201 | A | 02 August 2000 | (Family: none) | | | |
| JP | 2000-212202 | A | 02 August 2000 | (Family: none) | | | |
| JP | 2014-109064 | A | 12 June 2014 | (Family: none) | | | |
| JP | 63-100140 | A | 02 May 1988 | US | 4880511 | A | |
| | | | | claims, examples, figures | | | |
| | | | | EP | 246070 | A1 | |
| JP | 64-8227 | A | 12 January 1989 | (Family: none) | | | |
| JP | 2016-40032 | A | 24 March 2016 | (Family: none) | | | |
| WO | 2021/245832 | A1 | 09 December 2021 | EP | 4163009 | A1 | |
| | | | | claims, examples, paragraph [0079] | | | |

Form PCT/ISA/210 (patent family annex) (July 2022)

INTERNATIONAL SEARCH REPORT
Information on patent family members

International application No.

**PCT/JP2023/039200**

| Patent document cited in search report | Publication date (day/month/year) | Patent family member(s) | Publication date (day/month/year) |
|---|---|---|---|
| | | CN 115836091 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1111453 A
- JP 2014109064 A
- JP 2017052961 A
- JP 2020204002 A
- WO 2016020952 A

- JP 2006192400 A
- WO 2014142166 A
- WO 2018139319 A
- JP 2021161320 A
- JP 2018119052 A